# FASCICULE DE BREVET EUROPEEN

(11) **EP 1 470 007 B1**
(45) Date de publication et mention de la délivrance du brevet: **08.08.2012**
(21) Numéro de dépôt: 03702485.8
(22) Date de dépôt: 21.01.2003
(51) Int. Cl.: B60C 11/24, G01B 11/06, G01N 3/56

(54) **PROCEDE ET SYSTEMES DE MESURE DE L'USURE D'UNE ENVELOPPE DE PNEUMATIQUE**
VERFAHREN UND VORRICHTUNGEN ZUR REIFENVERSCHLEISSMESSUNG
METHOD AND SYSTEMS FOR MEASURING WEAR IN RELATION TO TYRE CASING

(30) Priorité: 21.01.2002 FR 0200850
(43) Date de publication de la demande: 27.10.2004
(73) Titulaire: COMPAGNIE GENERALE DES ETABLISSEMENTS MICHELIN, 63000 Clermont-Ferrand (FR); Michelin Recherche et Technique S.A., 1463 Granges-Paccot (CH)
(72) Inventeur: GODEAU, Gilles, F-63000 Clermont-Ferrand (FR); ROBERT, Michel, F-63200 Cellule (FR); PEYRON, Georges, F-63200 Riom (FR); MENARD, Gilbert, F-63530 Volvic (FR)
(74) Mandataire: Dequire, Philippe Jean-Marie Denis
(86) Numéro de dépôt international: PCT/EP2003/000557
(87) Numéro de publication internationale: WO 2003/059656

(56) Documents cités:
- US-A- 4 884 434
- US-A- 6 067 159
- PATENT ABSTRACTS OF JAPAN vol. 1999, no. 11, 30 septembre 1999 (1999-09-30) & JP 11 170819 A (YAZAKI CORP), 29 juin 1999 (1999-06-29)

## Description

La présente invention concerne un procédé de mesure de l'usure à l'arrêt ou en roulage d'au moins une enveloppe de pneumatique montée sur une roue, une enveloppe et une roue prévues séparément pour la mise en oeuvre de ce procédé, et un ensemble monté pour véhicule automobile comportant ladite enveloppe et ladite roue. L'invention concerne également des procédés de fabrication de ladite enveloppe et un véhicule automobile comportant au moins un tel ensemble monté.

Il est connu de pourvoir de détecteurs d'usure les éléments de sculpture d'une bande de roulement d'enveloppe de pneumatique pour véhicule automobile.

Les documents de brevet anglais GB-A-2 330 808 et GB-A-2 268 715 divulguent des indicateurs visuels d'usure constitués de couches de caoutchouc coloré réfléchissant la lumière qui sont disposées sur toute la circonférence de l'enveloppe, dans la masse de la bande de roulement, et qui sont visibles suite à une usure donnée de ladite enveloppe.

Un inconvénient majeur de ces détecteurs réside dans le caractère précaire de l'information d'usure obtenue, laquelle peut être seulement constatée visuellement et éventuellement bien après que le seuil critique d'usure de l'enveloppe a été dépassé.

Le document JP-A-11170819 divulgue un procédé et une enveloppe de pneumatique selon les préambules des revendications 1 et 7.

Un but de la présente invention est de proposer un procédé de mesure de l'usure Un but de la présente invention est de proposer un procédé de mesure de l'usure d'au moins une enveloppe de pneumatique montée sur une roue et comportant des éléments de sculpture, qui permette de remédier à cet inconvénient.

A cet effet, le procédé de mesure de l'usure selon l'invention est tel que défini à la revendication 1.

Par élément de sculpture, on entend dans la présente description tout élément en relief qui est destiné à être en contact à un moment ou à un autre avec le sol de roulage suite à son incorporation à la bande de roulement, i.e. dès le début du roulage, ou après un début d'usure de cet élément. Cet élément peut ainsi être constitué d'un pain, par exemple de forme sensiblement parallélépipédique ou cylindrique, ou d'un « rib » ou nervure circonférentielle de section transversale variable (i.e. s'étend sur tout ou partie de la circonférence de la bande de roulement).

On notera que l'élément de sculpture selon l'invention peut être avantageusement constitué d'un « témoin d'usure », par exemple en forme de pain ou de nervure de hauteur sensiblement inférieure à celle des sculptures de la bande de roulement destinées à être en contact avec le sol de roulage dès le début du roulage.

Selon une autre caractéristique de l'invention, lesdits éléments de sculpture étant destinés à être en contact avec un sol de roulage par l'intermédiaire de leurs sommets respectifs dès le début ou à un moment ultérieur du roulage, ladite variable d'énergie est elle-même représentative de l'affleurement d'un moyen de transmission de rayonnements électromagnétiques à la surface du sommet dudit élément.

Selon une autre caractéristique de l'invention, ledit procédé comprend l'affectation, à une valeur de ladite variable d'énergie inférieure à au moins un seuil d'énergie prédéterminé, d'une valeur de ladite variable d'usure correspondant à une usure dudit élément en deçà d'au moins un seuil d'usure prédéterminé.

Selon un mode de réalisation de l'invention, ledit procédé comprend l'affectation, à une valeur de ladite variable d'énergie égale ou supérieure audit seuil d'énergie prédéterminé, d'une valeur de ladite variable d'usure correspondant à une usure dudit élément ayant atteint ou dépassé ledit seuil d'usure prédéterminé.

Selon un autre mode de réalisation de l'invention, ledit procédé comprend l'affectation, à une pluralité de valeurs de ladite variable d'énergie atteignant ou dépassant ledit seuil d'énergie prédéterminé, d'autant de valeurs de ladite variable d'usure correspondant respectivement à des niveaux d'usure dudit élément atteignant ou dépassant ledit seuil d'usure prédéterminé, de sorte que l'accroissement de l'usure dudit élément soit mesuré en continu entre ledit seuil d'usure et un niveau d'usure maximal.

Avantageusement, ledit rayonnement électromagnétique transmis dudit espace extérieur audit espace intérieur est constitué de lumière visible, ladite ou lesdites enveloppes équipant un même véhicule automobile.

Un autre but de la présente invention est de proposer une enveloppe de pneumatique pour la mise en oeuvre de ce procédé de mesure de l'usure, ladite enveloppe étant délimitée radialement par une face interne et par des éléments de sculpture destinés à être en contact avec un sol de roulage par l'intermédiaire de leurs sommets respectifs dès le début ou à un moment déterminé dudit roulage. Ce but est atteint avec une enveloppe de pneumatique selon la revendication 7

Selon l'invention, ladite enveloppe comporte dans sa masse au moins un moyen de transmission de rayonnements électromagnétiques qui est prévu pour pouvoir transmettre à travers l'un au moins desdits éléments un rayonnement incident issu de l'espace extérieur à ladite enveloppe à l'espace intérieur à celle-ci, à partir du moment où ledit moyen de transmission affleure à la surface du sommet dudit élément.

De préférence, ledit ou chaque moyen de transmission est perméable à la lumière visible (i.e. étant translucide ou transparent) et il peut être constitué d'un ou de plusieurs matériaux minéraux ou organiques.

Des essais réalisés montrent que la rigidité et l'aire de la section axiale (i.e. dans le plan axial de l'enveloppe perpendiculaire à son plan circonférentiel médian) desdits moyens de transmission conditionnent l'aptitude de ces derniers à rester en place en roulage au cours de la vie du pneumatique. En effet, un moyen de transmission aura d'autant plus tendance à être éjecté de l'enveloppe que les discontinuités locales de rigidité avec les compositions adjacentes de l'enveloppe seront plus élevées (i.e. que ce moyen sera plus rigide), pour une même aire de la section axiale le caractérisant.

Selon un premier exemple de réalisation de l'invention, le ou chaque moyen de transmission est constitué d'un ou de plusieurs matériaux relativement rigides présentant chacun un module d'allongement MA10 (à 10 % de déformation), mesuré selon la norme ASTM D 412 de 1998, qui est compris entre 1 GPa et 10 GPa (ce matériau étant avantageusement à base de verre, de quartz ou à base d'un plastique comprenant au choix un polymère thermoplastique tel qu'un polystyrène, un polyméthacrylate de méthyle, un polycarbonate, un polyamide, un polychlorure de vinyle, un polyester ou un polymère thermodurcissable).

On peut par exemple utiliser une ou des fibres optiques débouchant dans l'espace intérieur qui sont chacune formées d'un coeur à base de verre, de silice ou de quartz et d'une gaine à base d'un tel polymère thermoplastique ou bien d'un verre, d'une silice ou d'un quartz d'indice de réfraction inférieur à celui du coeur.

On peut également utiliser une ou des fibres optiques qui sont chacune constituées de plastiques tels que ceux susmentionnés (la gaine de la ou chaque fibre optique étant constituée d'un plastique d'indice de réfraction inférieur à celui du coeur).

On peut également utiliser à titre de moyens de transmission un ou des assemblages rectilignes ou non de fibres optiques de section très réduite (diamètre entre 50 µm et 100 µm) qui sont chacun noyés dans une gaine constituée d'une composition de caoutchouc prévue pour découpler mécaniquement chaque assemblage de fibres optiques des compositions de caoutchouc adjacentes dans l'enveloppe.

Chaque assemblage de fibres optiques est avantageusement du même type que ceux utilisés pour réaliser les câbles utilisés comme renforts métalliques ou textiles dans les enveloppes de pneumatique (i.e. des câbles à torons ou des câbles à couches de pas d'enroulement fini ou infini), et chaque assemblage présente une résistance à la rupture accrue provoquée par les déformations en roulage du sommet de l'enveloppe. On peut par exemple utiliser des assemblages de type « paquets » comportant chacun une dizaine à une centaine de fibres optiques.

On notera que ces assemblages de fibres optiques sont particulièrement avantageux pour la mise en oeuvre du procédé de mesure de l'usure selon l'invention, compte tenu, d'une part, de l'excellent coefficient de transmission de la lumière de ce type de matériau qui permet d'utiliser des assemblages de diamètre inférieur à 1 mm et, d'autre part, de l'absence d'évolution de ces assemblages avec le temps et les sollicitations thermo-mécanique induites pendant la vie du pneumatique.

De préférence, le ou chaque moyen de transmission constitué de ce ou ces matériaux relativement rigides présentera une section axiale d'aire très réduite (par exemple à l'instar de celle d'une fibre optique), de sorte à minimiser les discontinuités de rigidités avec les compositions adjacentes et à rester ainsi durablement en place, suite à un roulage prolongé.

On notera que cette minimisation de l'aire de la section axiale du ou de chaque moyen de transmission peut être compensée par l'utilisation d'un coefficient de transmission des rayonnements très élevé pour ce moyen de transmission et/ou en prévoyant une pluralité de tels moyens de transmission dans l'enveloppe, pour une quantité d'énergie transmise donnée.

Selon un second exemple préférentiel de réalisation de l'invention, le ou chaque moyen de transmission est constitué d'au moins une composition de caoutchouc à base d'au moins un élastomère présentant un module d'allongement MA10 (à 10 % de déformation), mesuré selon la norme ASTM D 412 de 1998, qui est compris entre 1 MPa et 20 MPa (cet élastomère appartenant avantageusement à la famille constituée par les élastomères réticulables, les élastomères thermoplastiques, les polyuréthannes vrais et les dérivés de polyuréthannes, tels que des polyuréthanne/ urée, des polyurées, des polyurée/ uréthanne, des polyuréthanne/ isocyanurate, des polyurée/ isocyanurate ou des polyuréthanne/ urée/ isocyanurate).

De préférence, on utilise des élastomères diéniques que l'on peut soit vulcaniser soit réticuler avec des peroxydes. On peut citer par exemple les polybutadiènes, les polyisoprènes ou les copolymères styrène/ butadiène. On peut également utiliser des élastomères à taux réduit de doubles liaisons comme les EPDM (terpolymères d'éthylène, de propylène et d'un diène) ou les caoutchoucs butyle (copolymères d'isoprène et d'isobutylène) halogénés ou non.

A titre encore plus préférentiel, on utilise des polyisoprènes, des copolymères styrène/ butadiène, des copolymères isoprène/ styrène ou des polybutadiènes.

A titre de composition de caoutchouc translucide utilisable dans ces moyens de transmission constitués de caoutchouc, on utilise avantageusement des compositions dépourvues d'élément tachant et d'ingrédients solides non solubles ou difficilement solubles dans la composition translucide, qui comprennent :
- des huiles paraffiniques à titre d'huile plastifiante, en lieu et place des huiles aromatiques ou même naphténiques usuelles,
- des antioxydants phénoliques non tachants à titre d'antioxydant, en lieu et place des antiozonants usuels qui conduisent à un brunissement important de la composition,
- une charge inorganique renforçante telle que de la silice, en quantité réduite à titre de charge renforçante en lieu et place du noir de carbone (qui est exclu dans ces compositions translucides),

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Avantageusement, ladite charge inorganique renforçante est, en totalité ou tout du moins majoritairement, de la silice. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées. De préférence, on utilise une silice présentant des surfaces spécifiques BETou CTAB qui vont toutes deux de 80 m²/g à 260 m²/g.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-735 088.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

A titre de charge inorganique renforçante, on peut aussi utiliser par exemple :
- des alumines (de formule Al₂O₃), telles que les alumines à dispersibilité élevée qui sont décrites dans le document de brevet européen EP-A-810 258, ou encore
- des hydroxydes d'aluminium, tels que ceux décrits dans le document de brevet international WO-A-99/28376.

Conviennent également des charges inorganiques renforçantes comprenant les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

La composition de caoutchouc translucide selon l'invention comprend en outre de manière classique un agent de liaison charge inorganique renforçante / matrice élastomère (encore appelé agent de couplage), qui a pour fonction d'assurer une liaison (ou couplage) suffisante, de nature chimique et/ou physique, entre la charge inorganique et la matrice, tout en facilitant la dispersion de la charge inorganique au sein de la matrice.

Avantageusement, le ou chaque moyen de transmission à base de ce ou ces élastomères pourra présenter une section axiale d'aire relativement élevée, du fait de la différence de rigidités peu significative avec les compositions de caoutchouc adjacentes, et pourra en contrepartie présenter un coefficient de transmission relativement réduit pour une quantité d'énergie transmise donnée.

Selon un mode préférentiel de réalisation de l'invention conforme à ce second exemple, l'enveloppe de pneumatique est telle que toutes les compositions de caoutchouc situées radialement à l'intérieur du ou des témoins d'usure (i.e. incluant le ou chaque moyen de transmission) sont translucides, ne comprenant ni noir de carbone ni opacifiant.

Selon un troisième exemple de réalisation de l'invention, le ou chaque moyen de transmission peut avantageusement comporter un coeur destiné à transmettre les rayonnements à base d'au moins un matériau relativement rigide, tel que défini ci-dessus dans ledit premier exemple de réalisation, qui est enveloppé d'une gaine compressible et déformable prévue pour découpler mécaniquement ledit coeur des compositions de caoutchouc adjacentes dans l'enveloppe de pneumatique. Cette gaine est de préférence à base d'un caoutchouc cellulaire et elle présente un module d'allongement MA10, mesuré selon la norme ASTM D 412 de 1998, compris entre 0,1 MPa et 1 MPa.

Ce moyen de transmission comportant ledit coeur et ladite gaine présente par exemple une forme de barre dont la surface latérale (matérialisée par ladite gaine) peut être avantageusement de forme cylindrique, prismatique, conique ou pyramidale.

On notera que ce coeur peut avantageusement présenter à la fois un coefficient de transmission élevé et une aire de section axiale également élevée, à l'instar dudit second exemple de réalisation.

De préférence, ladite gaine est à base d'un caoutchouc cellulaire à cellules fermées pour éviter l'absorption d'eau et surtout la diffusion du gaz de gonflage dans la structure de l'enveloppe de pneumatique (notamment dans les nappes et câbles de l'armature de carcasse).

A titre exemplatif, on peut utiliser du verre pour ledit coeur et, pour ladite gaine, de la mousse de butyle, du polychloroprène, un copolymère de butadiène et d'acrylonitrile (NBR), un terpolymère d'éthylène, de propylène et d'un diène (EPDM), ou encore une composition de caoutchouc utilisée dans l'enveloppe qui a été expansée.

Les enveloppes selon l'invention peuvent être fabriquées de la manière suivante.

Selon un premier mode de réalisation de l'invention, chaque moyen de transmission des rayonnements est formé dans l'enveloppe en cours de fabrication, avant l'opération de cuisson du bandage correspondant (par « bandage », on entend dans la présente description l'enveloppe non cuite, parfois appelée « ébauche »). Il est dans ce cas nécessaire que le(s) matériau(x) constituant chaque moyen de transmission puissent supporter sans dommage la température de cuisson de l'enveloppe (typiquement proche de 170° C).

Selon un second mode préférentiel de réalisation de l'invention, chaque moyen de transmission est formé dans l'enveloppe après l'opération de cuisson du bandage correspondant, de préférence par insertion et éventuellement collage du ou de chaque moyen de transmission dans un évidement pratiqué dans l'enveloppe cuite.

Conformément à ce dernier mode préférentiel, ledit ou chaque moyen de transmission présente sensiblement une forme de punaise comportant une tête pourvue d'une tige en son centre, ladite tige étant contenue dans un évidement radial pratiqué de ladite face interne audit sommet de l'élément de sculpture correspondant, de sorte que ladite tête soit en contact avec ladite face interne et que l'extrémité libre de ladite tige affleure pratiquement à la surface dudit sommet, ladite tête et une partie de la tige s'étendant à partir de ladite tête étant constituées de ladite composition de caoutchouc translucide alors que l'autre partie de ladite tige contenant ladite extrémité libre est constituée d'au moins une composition de caoutchouc opaque, la hauteur radiale interfaciale entre ladite composition translucide et ladite composition opaque étant prévue pour correspondre à un seuil d'usure à détecter dans ledit élément de sculpture.

Selon un exemple avantageux de réalisation de l'invention, ladite enveloppe comporte plusieurs moyens de transmission des rayonnements qui présentent respectivement différentes couleurs dans le spectre du domaine visible.

Avantageusement, ledit ou chaque moyen de transmission présente une section dans la direction axiale de ladite enveloppe dont l'aire croît d'une manière continue sur une hauteur d'usure donnée radialement vers l'intérieur de ladite enveloppe, de telle sorte que la quantité d'énergie dudit rayonnement transmis dans ledit espace intérieur croisse d'une manière continue avec l'aire de ladite section affleurant à la surface du sommet dudit élément, lors de l'usure de ce dernier.

Selon un exemple avantageux de réalisation de l'invention, ledit ou chaque moyen de transmission s'étend sur toute la circonférence de ladite enveloppe.

Avantageusement, ladite enveloppe peut comporter une pluralité de moyens de transmission dont les hauteurs respectives, dans la direction radiale de ladite enveloppe, correspondent à différents seuils d'usure prédéterminés à détecter pour ledit élément.

Dans le cas précité où ledit ou chaque moyen de transmission des rayonnements est constitué d'une fibre optique débouchant dans ledit espace intérieur, ladite enveloppe peut être pourvue d'au moins une unité de détection de l'usure qui contient :
- dans une partie amont radialement supérieure traversant ladite face interne et se terminant dans l'un desdits éléments de sculpture en retrait de son sommet, le(s)dit(s) moyen(s) de transmission, qui comportent une ou plusieurs fibres optiques parallèles entre elles qui sont chacune prévues pour pouvoir transmettre un rayonnement incident issu de l'espace extérieur à ladite enveloppe à l'espace intérieur à celle-ci et dont la ou les hauteurs radiales correspondent respectivement à un ou différents seuils d'usure prédéterminés à détecter pour ledit élément, et
- dans une partie aval radialement inférieure montée dans ledit espace intérieur à l'enveloppe, un moyen de détection connecté à ladite ou auxdites fibres optiques qui est prévu pour détecter l'énergie du rayonnement qui lui est transmis par ladite ou chaque fibre, à partir du moment où l'une au moins desdites fibres affleure à la surface du sommet dudit élément de sculpture.

Selon une autre caractéristique de l'invention, ladite unité de détection de l'usure comporte, dans ladite partie aval, un émetteur couplé à une antenne pour émettre des signaux électriques représentatifs des mesures d'énergie rayonnée et un microprocesseur pour le traitement desdites mesures d'énergie rayonnée.

Un autre but de la présente invention est de proposer une roue comportant une jante destinée à recevoir une enveloppe de pneumatique telle que définie précédemment, pour la mise en oeuvre du procédé de mesure de l'usure également précité.

Selon l'invention, la jante de roue est pourvue d'un moyen de détection de l'énergie du rayonnement transmis par ledit ou chaque moyen de transmission dans l'espace intérieur à l'enveloppe, à partir du moment où le(s)dit(s) moyens de transmission affleurent à la surface du sommet de l'élément de sculpture du fait de l'usure de ce dernier.

Avantageusement, ladite jante de roue est pourvue en outre d'un moyen de quantification de l'énergie du rayonnement transmis dans ledit espace intérieur à ladite enveloppe et/ou de moyens de localisation dans ladite enveloppe de chaque moyen de transmission des rayonnements.

Egalement à titre avantageux, ladite jante de roue est pourvue en outre d'un moyen de discrimination des couleurs des rayonnements visibles transmis.

Selon un mode préférentiel de réalisation de l'invention, ledit moyen de détection est contenu dans un module de roue qui est monté sur ladite jante de roue et qui est destiné à surveiller des paramètres de fonctionnement de l'ensemble monté, tels que sa pression et sa température internes, le module de roue comportant en outre un émetteur couplé à une antenne pour émettre des signaux électriques représentatifs de mesures d'énergie rayonnée, de température et de pression, et un microprocesseur destiné à traiter l'ensemble des mesures d'énergie rayonnée, de température et de pression.

Selon un exemple avantageux de réalisation de l'invention, ladite jante de roue est en outre pourvue de moyens pour capter les rayonnements reçus à la surface de ladite jante dans des directions radiales par rapport à ladite surface de jante, et pour concentrer ces rayonnements captés en les dirigeant pratiquement le long de ladite surface de jante vers ledit détecteur de rayonnement.

A cet effet, ladite jante est par exemple pourvue en son fond d'un collier de maintien dudit module de roue, la face radialement supérieure dudit collier comportant lesdits moyens pour capter et concentrer les rayonnements.

Un autre but de la présente invention est de proposer un ensemble monté pour la mise en oeuvre du procédé précité de mesure de l'usure, comportant une roue et une enveloppe de pneumatique qui est montée sur ladite roue.

Selon l'invention, ledit ensemble monté est tel que ladite enveloppe et ladite roue sont tels que définis précédemment.

Un autre but de l'invention est de proposer un véhicule automobile qui comporte au moins l'ensemble monté selon l'invention, ce véhicule étant pourvu d'un récepteur destiné à recevoir lesdits signaux dudit émetteur, d'un calculateur connecté audit récepteur qui est destiné à traiter ces signaux et d'un afficheur installé dans l'habitacle du véhicule qui est connecté audit calculateur et qui est destiné à informer le conducteur du véhicule de l'état d'usure des éléments de sculpture de la ou chaque enveloppe.

Les caractéristiques précitées de la présente invention, ainsi que d'autres, seront mieux comprises à la lecture de la description suivante d'un exemple de réalisation de l'invention, donné à titre illustratif et non limitatif, ladite description étant réalisée en relation avec les dessins joints, parmi lesquels :
la Fig. 1 est une vue schématique en coupe méridienne d'un ensemble monté selon un premier mode de réalisation de l'invention,
la Fig. 2 est une vue schématique en coupe méridienne d'un ensemble monté selon un second mode de réalisation de l'invention,
la Fig. 3 est une vue schématique en coupe méridienne d'un ensemble monté selon un troisième mode de réalisation de l'invention,
la Fig. 4 est un médaillon représentant en vue éclatée des moyens de mesure de l'usure dont est pourvue l'enveloppe selon l'invention de la Fig. 3,
la Fig. 5 est une vue schématique en coupe selon le plan circonférentiel médian V-V de la Fig. 1 d'un variante de réalisation de l'ensemble monté de la Fig. 2, et
la Fig. 6 illustre d'une manière schématique et partielle le montage d'un ensemble monté selon l'invention sur le châssis d'un véhicule automobile selon l'invention, ainsi que la transmission des informations dudit ensemble monté vers l'intérieur dudit véhicule.
la Fig. 7 est une vue en coupe axiale d'un moyen de transmission des rayonnements selon un exemple de réalisation de l'invention pour la mesure de l'usure,
la Fig. 8 est une vue schématique en coupe axiale, selon un exemple de réalisation de l'invention, d'un moyen d'introduction utilisable pour introduire dans l'enveloppe un moyen de transmission selon l'invention tel que celui de la Fig. 7, par la face radialement interne de l'enveloppe,
la Fig. 9 est une vue schématique partielle en coupe méridienne d'une enveloppe pourvue dans sa masse du moyen de transmission de la Fig. 7 qui est logé dans le moyen d'introduction de la Fig. 8 pour son introduction dans l'enveloppe,
la Fig. 10 est une vue schématique partielle en coupe méridienne d'une enveloppe dans laquelle a été pratiqué, par la face radialement externe de l'enveloppe et au cours de la cuisson de celle-ci, un évidement destiné à permettre l'introduction dans ladite enveloppe d'un moyen de transmission selon l'invention,
la Fig. 11 est une vue en coupe axiale d'un moyen de transmission selon un autre exemple de réalisation de l'invention qui est destiné à être introduit dans l'enveloppe de la Fig. 10 par ladite face radialement externe,
la Fig. 12 est une vue en coupe axiale d'un moyen de transmission selon une variante de réalisation de la Fig. 11, également destiné à être introduit dans l'enveloppe de la Fig. 10 par ladite face radialement externe,
la Fig. 13 est une vue en coupe axiale d'un exemple de moyen selon l'invention pour réaliser un évidement dans une enveloppe par sa face radialement externe, avant la cuisson de l'enveloppe,
la Fig. 14 est une vue schématique en coupe axiale d'un autre exemple de moyen selon l'invention pour réaliser un évidement réglable en profondeur dans une enveloppe par sa face radialement externe, au cours de la cuisson de l'enveloppe,
la Fig. 15 est une vue schématique en coupe axiale d'une variante de la Fig. 14 d'un moyen selon l'invention pour réaliser un évidement réglable en profondeur dans une enveloppe par sa face radialement externe, au cours de la cuisson de l'enveloppe,
la Fig. 16 est une vue schématique en coupe axiale d'une autre variante de la Fig. 14 d'un moyen selon l'invention pour réaliser un évidement réglable en profondeur dans une enveloppe par sa face radialement externe, au cours de la cuisson de l'enveloppe,
la Fig. 17 est une vue schématique en coupe méridienne d'un ensemble monté selon l'invention conformément à une variante de réalisation de la Fig. 1, dans laquelle plusieurs moyens de transmission des rayonnements comprennent chacun assemblages de fibres optiques non rectilignes, et
la Fig. 18 est une vue schématique en coupe partielle selon ledit plan circonférentiel médian de la Fig. 1 d'une jante de roue selon une variante de réalisation de l'invention qui est pourvue d'un module de roue selon l'invention comportant notamment ledit moyen de détection des rayonnements et des moyens pour concentrer ces derniers vers ledit moyen de détection.

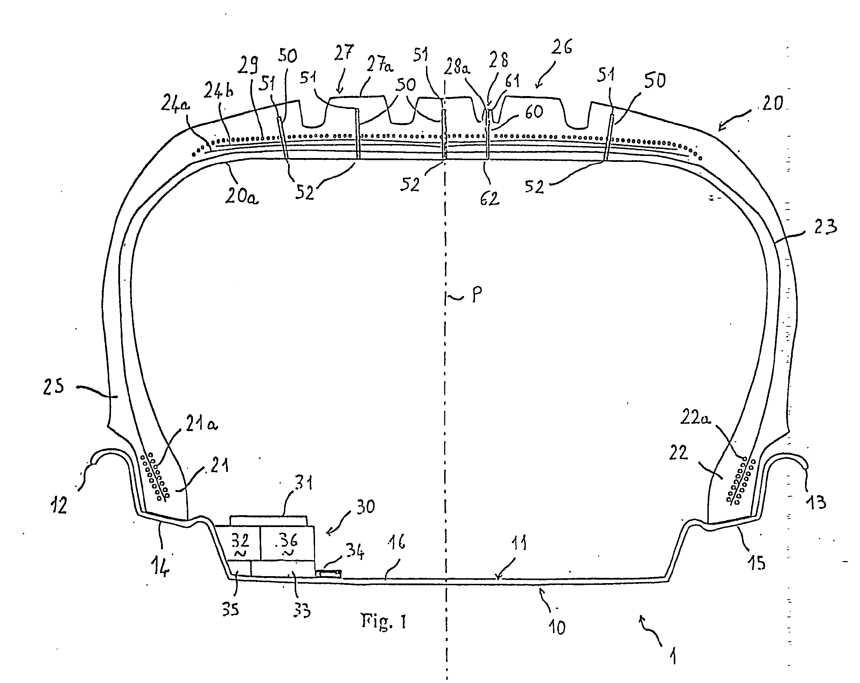

L'ensemble monté 1 représenté à la Fig. 1 comporte une roue 10, une enveloppe de pneumatique 20 qui est montée sur la roue 10 et un module de roue 30 qui est également monté sur la roue 10 entre celle-ci et l'enveloppe 20 et qui est notamment destiné à surveiller des paramètres de fonctionnement de l'ensemble monté 1, tels que sa pression et sa température internes.

Pour des raisons de clarté, seule la jante 11 de la roue 10 est visible à la Fig. 1. Cette jante 11 comporte, à partir de ses saillies périphériques 12 et 13, deux sièges de jante 14 et 15 destinés à recevoir respectivement des bourrelets 21 et 22 de l'enveloppe 20, et une portée 16 qui relie ces sièges entre eux.

On notera que la jante 11 d'un ensemble monté selon l'invention pourrait présenter toute forme connue dans l'état de la technique, en particulier comportant des sièges 14 et 15 plus ou moins inclinés vers l'intérieur ou vers l'extérieur de la jante 11 et une portée 16 présentant une géométrie non linéaire en coupe méridienne, par exemple comportant une ou plusieurs gorges ou rainures.

D'une manière usuelle, l'enveloppe 20 comporte essentiellement une armature de carcasse (symbolisée par une nappe de carcasse 23 à la Fig. 1) qui est radialement surmontée par une armature de sommet (symbolisée par des nappes sommet de travail 24a et 24b à la Fig. 1) et qui se prolonge latéralement par des flancs 25 dont les bourrelets 21 et 22 sont renforcés par des tringles 21a et 22a, une bande de roulement 26 comportant des éléments de sculpture 27, 28 surmontant radialement l'armature de sommet.

L'enveloppe 20 peut comporter en outre une nappe sommet dite de frettage 29 qui par exemple surmonte radialement ladite armature de sommet, de sorte à couvrir les nappes sommet de travail 24a, 24b, et qui est notamment caractérisée en ce que les câbles qui la renforcent sont disposés en spirale selon un angle de 0° ou proche de 0° avec le plan circonférentiel médian P du pneumatique (il est également connu de disposer des bandelelettes ou des nappes relativement étroites selon un angle d'environ 0° à la place des câbles précités, pour remplir une fonction de frettage de l'armature de sommet).

On notera que l'enveloppe 20 de l'ensemble monté 1 selon l'invention pourrait présenter une architecture différente de celle susmentionnée, étant entendu qu'elle doit nécessairement comporter une bande de roulement 26 surmontant des armatures de carcasse et de sommet qui comportent des nappes 23, 24a, 24b composites renforcées par des câbles.

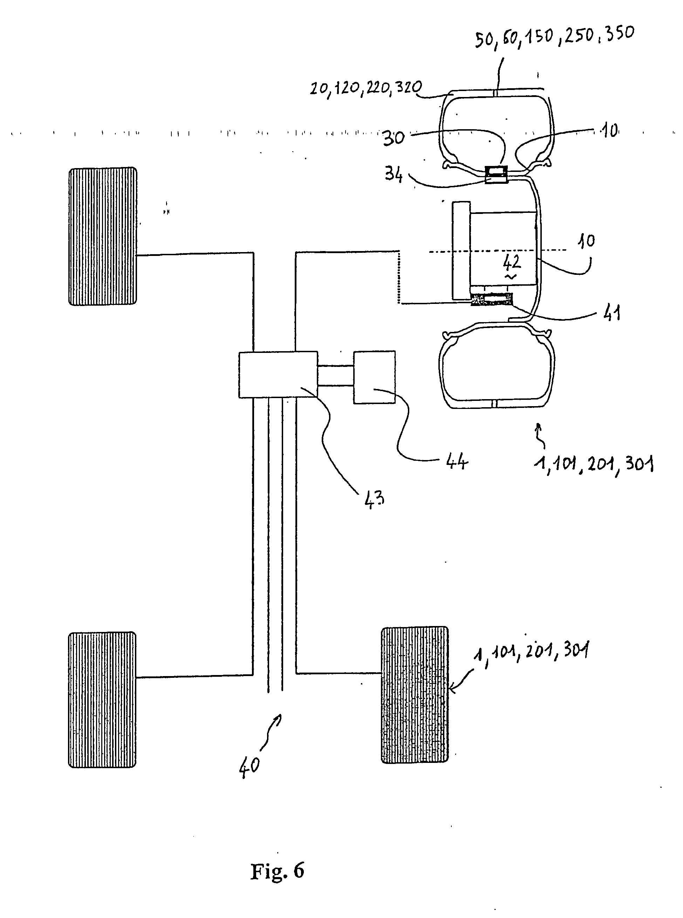

A titre d'éléments de sculpture 27, 28, on a représenté à la Fig. 1, d'une part, des premiers éléments de sculpture 27 constitués par exemple de pains ou de nervures circonférentielles qui sont destinés, lors du roulage d'un véhicule automobile 40 (représenté symboliquement à la Fig. 6) comportant l'ensemble monté 1, à évoluer par l'intermédiaire de leurs sommets respectifs 27a au contact du sol de roulage dès le début de ce dernier, et, d'autre part, un second élément de sculpture 28 constitué d'un « témoin d'usure » pouvant être de forme analogue à celle des premiers éléments de sculpture 27 mais présentant une hauteur sensiblement inférieure à celle de ces éléments 27.

Dans l'exemple de la Fig. 1, l'enveloppe 20 est pourvue d'une pluralité de moyens de transmission 50, 60 qui sont chacun prévus pour pouvoir transmettre des rayonnements électromagnétiques incidents extérieurs à l'enveloppe 22, tels que la lumière visible, d'une extrémité amont radialement supérieure 51, 61 à une extrémité aval radialement inférieure 52, 62 que chacun de ces moyens de transmission 50, 60 comportent.

On distingue en premier lieu à la Fig. 1 les moyens de transmission 50 qui sont chacun disposés dans l'enveloppe 20, de telle manière que leur extrémité 51 débouche dans un premier élément de sculpture 27 de la bande de roulement 26 en faisant face au sommet 27a de celui-ci, à une distance donnée de ce sommet 27a correspondant à une hauteur d'usure prédéterminée de cet élément de sculpture 27, et que leur extrémité 52 débouche sur la face radialement interne 20a (matérialisée par la gomme intérieure) de l'enveloppe 20 et communique ainsi avec l'espace intérieur à celle-ci (i.e. espace compris entre l'enveloppe 20 et la jante 10).

On distingue en second lieu à la Fig. 1 le moyen de transmission 60 qui est disposé dans l'enveloppe 20, de telle manière que son extrémité radialement supérieure 61 débouche dans un second élément de sculpture 28 ou « témoin d'usure » de la bande de roulement 26 en se situant radialement juste en dessous du sommet 28a de celui-ci, et que son extrémité radialement inférieure 62 débouche sur la face radialement interne 20a de l'enveloppe 20 et communique ainsi avec l'espace intérieur à celle-ci.

Chaque moyen de transmission des rayonnements 50, 60 traverse, d'une part, une partie de la bande de roulement 26 et, d'autre part, la nappe sommet de frettage 29, les nappes sommet de travail 24a et 24b et la nappe de carcasse 23.

On notera que chaque moyen de transmission 50 ou 60 peut être constitué de tout moyen transparent à un ou plusieurs rayonnements électromagnétiques (i.e. qui laisse passer ce ou ces rayonnements) et, à titre préférentiel, d'un moyen qui laisse passer au moins la lumière visible.

Dans le mode de réalisation de la Fig. 1, les moyens de transmission des rayonnements 50, 60 présentent chacun une forme de cylindre dont le diamètre est par exemple de l'ordre de 0,5 mm, et ils sont respectivement disposés en regard des sommets 27a, 28a d'éléments de sculpture 27, 28 occupant des positions différentes dans la direction axiale de l'enveloppe 20. L'un des moyens de transmission 50 occupe par exemple un emplacement centré sur le plan circonférentiel médian P de l'enveloppe 20, alors que d'autres occupent des emplacements axialement adjacents de part et d'autre de ce plan P (incluant le « témoin d'usure » 28), pouvant aller jusqu'à l'épaule 26a de l'enveloppe 20.

Le module de roue 30 est pourvu selon l'invention, d'un moyen de détection 31 prévu pour détecter en un ou plusieurs points de l'espace intérieur à l'enveloppe 20. l'énergie d'un rayonnement lumineux transmis par chaque moyen de transmission 50 ou 60. Le moyen de détection 31 peut être constitué d'un détecteur électriquement passif, tel qu'une cellule photovoltaïque, ou bien d'un détecteur électriquement actif, tel qu'un détecteur photoélectrique avantageusement constitué d'une photodiode (diode à semiconducteur produisant un courant électrique par absorption du rayonnement lumineux).

A titre optionnel, le moyen de détection des rayonnements 31 est couplé à un moyen de quantification de ceux-ci (non représenté) qui est prévu pour quantifier l'énergie des rayonnements transmis dans l'espace intérieur à l'enveloppe 20.

On notera que les moyens de transmission 50, 60 peuvent être respectivement constitués de matériaux de différentes couleurs dans le spectre du domaine visible, par exemple à base de compositions de caoutchouc translucides et colorées, pour la modulation des quantités d'énergie lumineuses transmises par ces moyens 50, 60 à l'intérieur de l'enveloppe 20 (par exemple, la lumière bleue véhicule environ deux fois plus d'énergie que la lumière rouge).

On notera également que des hauteurs radiales différentes pour les extrémités radialement supérieures 51, 61 des moyens de transmission 50, 60 (correspondant à des hauteurs d'usure plus ou moins critiques des éléments de sculpture 27, 28) peuvent être respectivement associées à des couleurs différentes pour lesdits moyens 50, 60.

Egalement à titre optionnel, le module de roue 30 peut être pourvu de moyens de localisation dans l'enveloppe 20 de chaque moyen de transmission des rayonnements 50, 60, et/ou de moyens de discrimination des couleurs des rayonnements transmis (ces moyens de localisation et de discrimination ne sont pas représentés).

Les moyens de localisation peuvent par exemple être constitués de n-1 volets séparateurs qui sont imperméables aux rayonnements transmis considérés et qui ont pour fonction de diviser pratiquement l'espace intérieur de l'enveloppe 20 en n zones respectivement situées en regard des n moyens de transmission 50, 60. On peut également utiliser des moyens de localisation constitués de lentilles, de surfaces réfléchissantes de type miroir, ou d'une combinaison de plusieurs de ces éléments, volets séparateurs inclus.

Les moyens de discrimination des couleurs des rayonnements transmis peuvent par exemple être constitués d'un filtre ou d'un prisme.

Toujours à titre optionnel, le module de roue 30 peut être pourvu, en amont des moyens de détection 31 et/ou de quantification des rayonnements transmis, de moyens, tels qu'une lentille, pour focaliser le rayonnement transmis par chaque ou les moyens de transmission 50, 60 (i.e. pour le concentrer en un foyer), ou au contraire pour diffracter ce rayonnement transmis.

Le module de roue 30 comporte notamment par ailleurs :
- des capteurs 32 destinés à mesurer la pression et la température dans l'espace intérieur à l'enveloppe 20,
- un émetteur 33 radio à hautes fréquences couplé à une antenne 34 pour émettre, en direction d'un récepteur radio 41 qui est monté sur le véhicule 40 (voir Fig. 6) à l'extérieur de l'ensemble monté 1, des signaux électriques représentatifs des mesures d'énergie rayonnée, de température et de pression,
- une pile 35 pour l'alimentation électrique du module de roue 30, et
- un microprocesseur 36 destiné à assurer le conditionnement et un premier traitement de l'ensemble des mesures d'énergie rayonnée, de température et de pression, ainsi qu'une gestion de la fréquence des communications avec le véhicule 40 (fonction économiseur de pile 35) et destiné à assurer le pilotage des émissions radio (on notera que ce microprocesseur 36 pourrait intégrer les capteurs 32 précités).

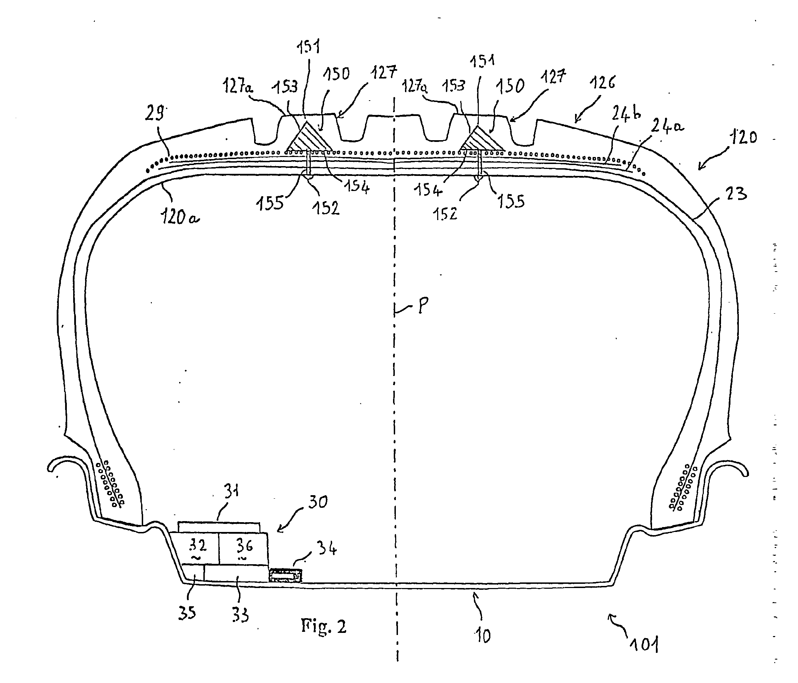

Pour la description des Figs. suivantes, les références numériques de la Fig. 1 ont été conservées pour des éléments présentant des caractéristiques de structure identiques, et elles ont été augmentées de 100 à partir de la Fig. 2 pour des éléments ou moyens présentant des caractéristiques de fonction identiques, sinon de structure.

L'ensemble monté 101 de la Fig. 2 se différencie uniquement de celui de la Fig. 1 en ce que chaque moyen de transmission des rayonnements 150 dont il est pourvu est constitué d'un matériau transparent au moins au rayonnement visible (de préférence une composition de caoutchouc translucide), et en ce qu'il présente une géométrie déterminée formée de deux parties distinctes 153 et 155 pouvant être constituées de matériaux identiques ou différents.

Chaque moyen de transmission des rayonnements 150 est délimité radialement par une extrémité amont radialement supérieure 151 débouchant dans un élément de sculpture 127 de la bande de roulement 126 en faisant face au sommet 127a de celui-ci, à une distance donnée de ce sommet 127a correspondant à une hauteur d'usure prédéterminée de cet élément de sculpture 127, et par une extrémité aval radialement inférieure 152 débouchant sur la face radialement interne 120a de l'enveloppe 120 et communiquant ainsi avec l'espace intérieur à celle-ci.

Plus précisément, chaque moyen de transmission 150 comporte une partie amont 153, qui est délimitée radialement par l'extrémité radialement supérieure 151 et par une base radialement inférieure 154 surmontant la nappe sommet de frettage 29 la plus radialement supérieure, de telle manière que la section de la partie amont 153 croisse radialement de l'extrémité 151 à la base 154.

Dans l'exemple de la Fig. 2, cette partie amont 153 présente une forme conique. On notera qu'elle pourrait également présenter une forme pyramidale, prismatique ou encore une forme tronconique ou de pyramide tronquée, pourvu que sa section croisse dans la direction radialement inférieure de l'enveloppe 120.

Chaque moyen de transmission 150 comporte également une partie aval 155 qui s'étendant radialement de la base 154 à l'extrémité radialement inférieure 152, et qui traverse la nappe sommet de frettage 29, les nappes sommet de travail 24a et 24b et la nappe de carcasse 23 de l'enveloppe 120. Comme on peut le voir à la Fig. 2, cette partie aval présente une section constante dans la direction radiale de l'enveloppe 120 et elle présente par exemple une forme de cylindre dont le diamètre est analogue à celui de chaque moyen de transmission 50, 60 de la Fig. 1.

L'ensemble monté 101 de cette Fig. 2 comporte un module de roue 30 présentant l'ensemble des caractéristiques susmentionnées en relation avec la Fig. 1, ce module 30 étant notamment pourvu dudit moyen de détection 31 prévu pour détecter l'énergie d'un rayonnement transmis et éventuellement dudit moyen de quantification prévu pour quantifier l'énergie de ce rayonnement transmis, desdits moyens de localisation de chaque moyen de transmission 150, desdits moyens de discrimination des couleurs des rayonnements transmis et desdits moyens de focalisation ou de diffraction.

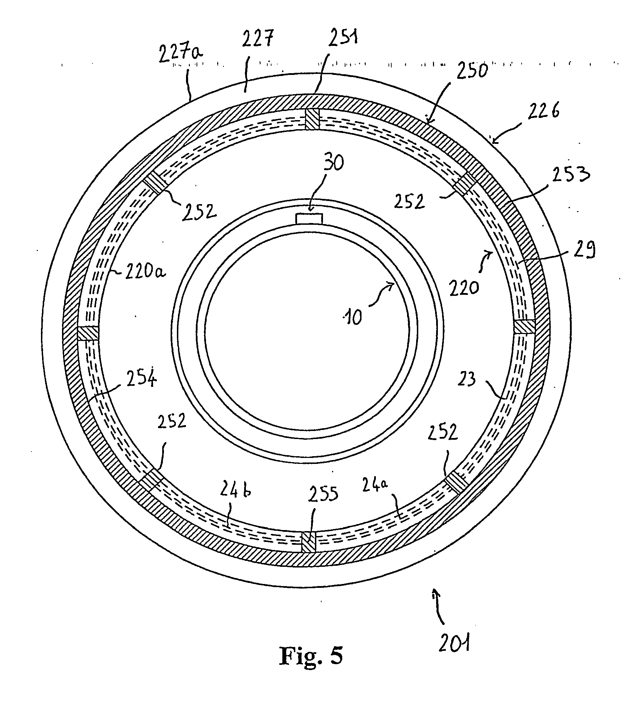

L'ensemble monté 201 représenté à la Fig. 5 représente une variante du mode de réalisation illustré à la Fig. 2. Cet ensemble monté 201 se différencie uniquement de ceux des Figs. 1 et 2 par la géométrie du ou de chaque moyen de transmission 250 dont l'enveloppe 220 est pourvue dans sa masse.

Le ou chaque moyen de transmission 250 s'étend sur toute la circonférence de l'enveloppe 220, et il est délimité radialement par un périmètre amont radialement supérieur 251 débouchant dans un élément de sculpture 227 de la bande de roulement 226 en faisant face au sommet 227a de celui-ci, à une distance donnée de ce sommet 227a correspondant à une hauteur d'usure prédéterminée de cet élément de sculpture 227, et par une pluralité d'extrémités aval radialement inférieures 252 débouchant sur la face radialement interne 220a de l'enveloppe 220 et communiquant ainsi avec l'espace intérieur à celle-ci.

Plus précisément, le ou chaque moyen de transmission 250 comporte une partie amont en forme de couronne 253 d'épaisseur réduite dans la direction axiale de l'enveloppe 220 (i.e. une couronne pratiquement plane en forme de sillon circonférentiel), qui est délimitée radialement par ledit périmètre radialement supérieur 251 et par un périmètre radialement inférieur 254 surmontant la nappe sommet de frettage 29 la plus radialement supérieure, de telle manière que la section de la partie amont 253 soit constante dans la direction radiale de l'enveloppe 220.

On notera que cette partie amont 253 pourrait présenter une épaisseur axiale plus significative, par exemple une forme elliptique (en particulier circulaire) ou polygonale (en particulier rectangulaire) dans la direction axiale de l'enveloppe 220, lui conférant par exemple une forme sensiblement de tore ou de volume annulaire. Dans ce cas, la partie amont 253 pourrait être délimitée par des surfaces 251 et 254 radialement supérieure et inférieure, en lieu et place des périmètres précités.

Le ou chaque moyen de transmission 250 comporte également une pluralité de parties aval 255 régulièrement espacées sur la circonférence de l'enveloppe 220 qui s'étendent chacune radialement dudit périmètre ou de ladite surface radialement inférieurs 254 à l'une des extrémités radialement inférieures correspondantes 252, et qui traversent la nappe sommet de frettage 29, les nappes sommet de travail 24a et 24b et la nappe de carcasse 23 de l'enveloppe 220. A l'instar de la partie aval 155 de la Fig. 2, cette partie aval 255 présente par exemple une section constante dans la direction radiale de l'enveloppe 220 et elle présente par exemple une forme de cylindre dont le diamètre est analogue à celui de ladite partie aval 155.

On notera que l'enveloppe 220 de la Fig. 5 peut être pourvue de plusieurs moyens de transmission des rayonnements 250 répartis sur la largeur (dimension axiale) de l'enveloppe 220.

L'ensemble monté 201 de cette Fig. 5 comporte un module de roue 30 présentant également l'ensemble des caractéristiques susmentionnées en relation avec la Fig. 1.

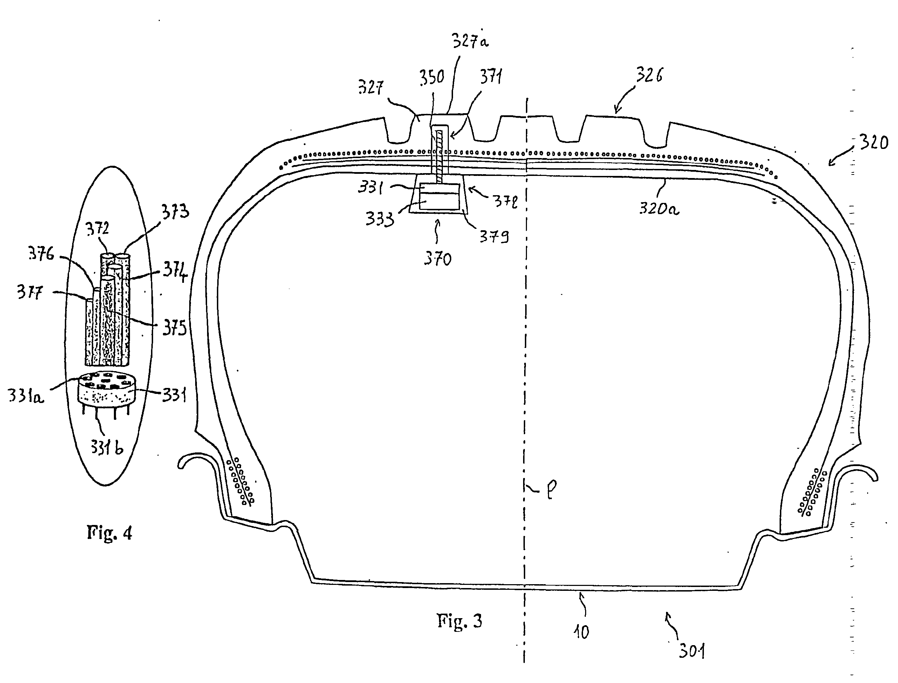

L'ensemble monté 301 de la Fig. 3 se différencie essentiellement de celui des Figs. 1, 2 ou 5 en ce que l'enveloppe 320 qu'il comporte est pourvue dans sa masse d'au moins une unité de détection de l'usure 370 qui incorpore :
- dans une partie amont radialement supérieure 371, des moyens de transmission des rayonnements 350 constitués de fibres optiques 372 à 377 (voir le médaillon de la Fig. 4), et
- dans une partie aval radialement inférieure 378, un moyen de détection ou photodétecteur 331 (électriquement actif ou passif, utilisé dans ce cas en mode photovoltaïque) solidarisé avec ces fibres optiques 372 à 377 qui est prévu pour détecter l'énergie du rayonnement spécifiquement transmis par chaque fibre 372 à 377, et une unité électronique 333 comportant un émetteur radio couplé à une antenne pour émettre des signaux électriques représentatifs des mesures d'énergie rayonnée en direction du récepteur radio 41 monté sur le véhicule 40 (Fig. 6), et un microprocesseur pour le traitement des mesures d'énergie rayonnée, ainsi qu'une gestion de la fréquence des communications avec le véhicule 40.

Est représenté à la Fig. 3 un élément de sculpture 327 constitué d'un « pain » de forme parallélépipédique ou d'une nervure, qui est pourvu dans sa masse de l'unité de détection 370, lequel s'étend radialement à travers l'enveloppe 320 à partir de la face radialement interne 320a de celle-ci et jusqu'à l'intérieur de l'élément 327.

Comme on peut le voir à la Fig. 3, l'unité 370 présente sensiblement une forme de punaise (i.e. une tête formant ladite partie aval 378 sur laquelle est montée une pointe formant ladite partie amont 371).

A l'intérieur de l'unité 370, les fibres optiques 372 à 377 et le moyen de détection 331 sont recouverts d'une composition d'enrobage 379, laquelle est identique à celle de la bande de roulement 326 ou compatible avec celle-ci.

Comme on peut le voir à la Fig. 4, les fibres optiques 372 à 377 sont montées d'une manière spécifique sur le photodétecteur 331, qui comporte des emplacements 331a respectivement destinés à les recevoir.

Le photodétecteur 331 présente une forme circulaire, et en son centre est montée une fibre optique de référence 372 de hauteur maximale parmi l'ensemble des fibres 372 à 377 (cette hauteur maximale correspondant à une seuil d'usure prédéterminé de l'élément de sculpture 327). Autour de cette fibre de référence 372 sont montées en cercle et à une égale distance les unes des autres les autres fibres optiques 373 à 377 (fibres optiques de mesure) comprenant une fibre 373 de hauteur égale à celle de la fibre de référence 372 suivie des fibres 374 à 377 dont la hauteur décroît d'une manière régulière sur la circonférence du photodétecteur 331, de telle sorte que la fibre 377 de hauteur minimale soit adjacente à ladite fibre 373 de hauteur maximale.

Les emplacements 331a du photodétecteur 331 sont reliés par des câbles 331b à ladite unité électronique 333 pour le traitement des signaux générés par ce photodétecteur 331.

On notera que ces différentes hauteurs des fibres optiques de mesure 373 à 377 correspondent respectivement à des seuils d'usure à détecter pour l'élément de sculpture 327, et que l'on pourrait affiner encore les mesures d'usure en prévoyant un nombre accru de fibres optiques de mesure dont les différences de hauteur seraient moindres sur la circonférence du photodétecteur 331.

Comme on peut le voir à la Fig. 3, la partie aval 378 de l'unité 370 est montée au contact de la face radialement interne 320a de l'enveloppe 320 par l'intermédiaire d'un épaulement que forme sa face interne de fixation avec ladite partie amont 371.

On notera que ladite partie aval 378 peut présenter toute géométrie appropriée. (de section circulaire, rectangulaire, etc.), pourvu qu'elle épouse la forme de cette face interne 320a à l'emplacement prévu pour sa fixation. Cette partie aval 378 peut avantageusement présenter un élargissement de sa section en direction de sa face interne de fixation (forme tronconique ou prismatique, par exemple).

Quant à la partie amont 371 de l'unité de détection 370, elle peut également présenter des géométries diverses, par exemple de formes parallélépipédique ou cylindrique.

L'unité 370 a été incorporée à l'enveloppe 320 lors de la fabrication de celle-ci, par solidarisation de l'épaulement de la partie aval 378 et de la partie amont 371 avec un emplacement de l'enveloppe 320 qui est prévu à cet effet. Cet emplacement présente par exemple la forme d'une cavité de section rectangulaire qui est destinée à recevoir ladite partie amont 371.

Cette incorporation de l'unité 370 à l'enveloppe 320 est de préférence effectuée après la cuisson de cette dernière, par insertion et collage de l'unité 370 dans un évidement pratiqué dans l'enveloppe cuite 320.

A la Fig. 6 est représenté de manière schématique le véhicule automobile 40 équipé d'ensembles montés 1, 101, 201, 301 dont l'un au moins (représenté en coupe ainsi que la fusée de roue 42 sur laquelle il est monté) est conforme à la présente invention (par exemple tel que décrit en référence à l'une des Figs. 1 à 5).

On a représenté sur cet ensemble monté 1, 101, 201, 301, d'une part, les moyens de transmission des rayonnements 50, 60, 150, 250, 350 de l'espace extérieur (air ambiant) vers l'espace intérieur de l'ensemble monté 1, 101, 201, 301 (y compris à l'intérieur du boîtier de détection 370, dans le cas des moyens de transmission 350 de la Fig. 3) et, d'autre part, le module de roue 30 incorporant les capteurs de pression et de température, l'émetteur radio couplé à une antenne 34 pour émettre des signaux électriques représentatifs des mesures d'énergie rayonnée, de pression et de température en direction du récepteur radio 41 monté sur le véhicule 40, et le microprocesseur pour le traitement des mesures d'énergie rayonnée, ainsi qu'une gestion de la fréquence des communications avec ledit récepteur radio 41 (lesdits capteurs, l'émetteur radio et ledit microprocesseur ne sont pas représentés pour des raisons de clarté).

On a représenté à la Fig. 6 un calculateur 43 dont est pourvu le véhicule 40, qui intègre les lois de fonctionnement de l'enveloppe de pneumatique 20, 120, 220, 320, ce calculateur 43 étant connecté au récepteur radio 41 et étant destiné à gérer l'affichage des résultats de mesures effectuées, à partir de l'exploitation qui en est faite en amont.

On a également représenté un afficheur 44 qui est connecté au calculateur 43 et qui est par exemple installé sur le tableau de bord du véhicule 41, cet afficheur étant par exemple destiné à informer en continu le conducteur du véhicule 40 de l'état d'usure des éléments de sculptures 27, 28, 127, 227, 327 de la ou chaque enveloppe 20 à 320.

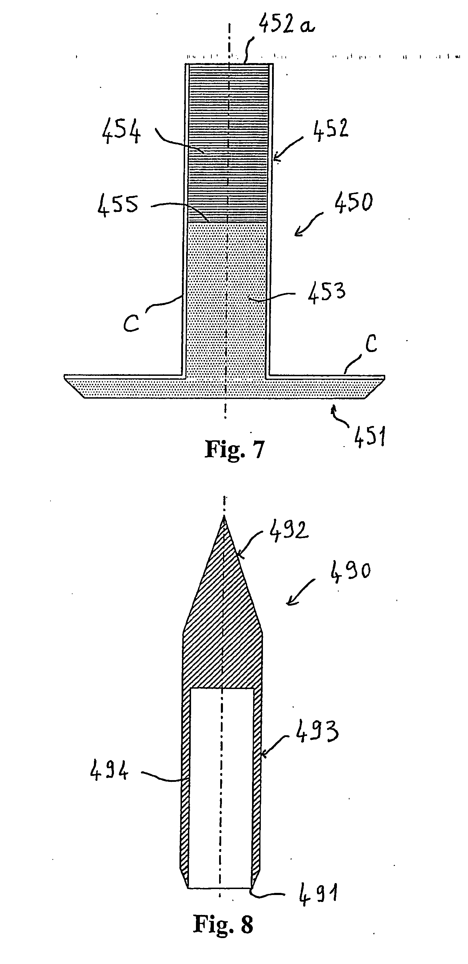

La Fig. 7 est une vue en coupe axiale d'un moyen de transmission des rayonnements 450 selon un exemple de réalisation de l'invention pour la mesure de l'usure. Ce moyen de transmission 450 présentant dans l'exemple de la Fig. 7 une symétrie de révolution, le plan de coupe considéré ici contient l'axe de symétrie dudit moyen 450.

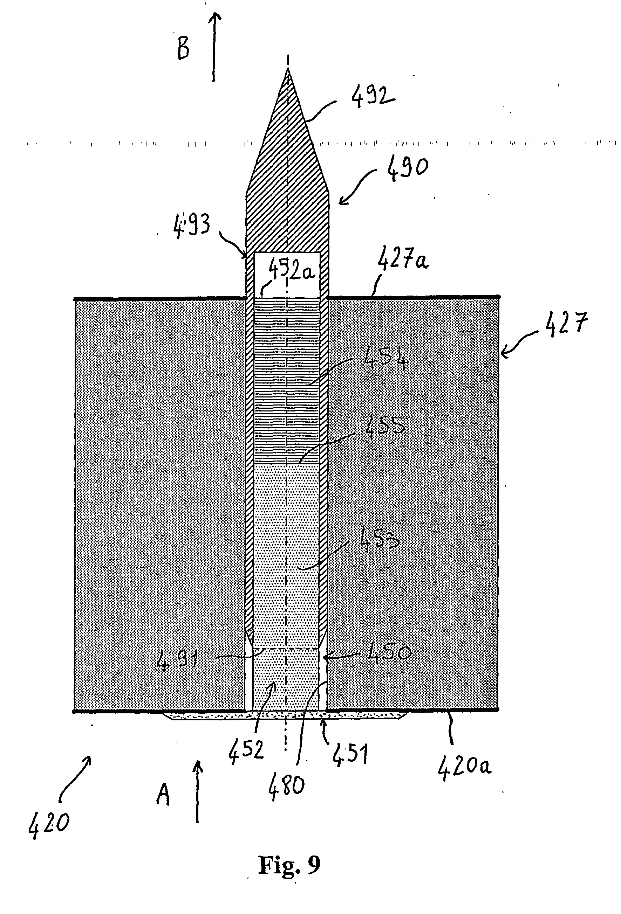

Ce moyen de transmission 450 présente sensiblement une forme de punaise, comportant une tête 451 pratiquement en forme de disque d'épaisseur réduite qui est pourvue d'une tige 452 cylindrique en son centre. Le moyen 450 est destiné à être introduit par la face radialement interne 420a de l'enveloppe 420 (i.e. la couche intérieure) après la cuisson de celle-ci, dans un évidement cylindrique radial 480 préalablement pratiqué dans le bandage avant sa cuisson ou bien au cours de sa cuisson (cet évidement radial 480, pratiqué de ladite face interne 420a à la face externe du bandage 427a, est visible à la Fig. 9), de sorte que la tête 451 du moyen 450 soit en contact étroit avec ladite face interne 420a et que l'extrémité libre 452a de la tige 452 affleure pratiquement à la surface radialement externe 427a de l'élément de sculpture 427 dont l'usure est à mesurer (voir Fig. 9).

Comme cela est visible à la Fig. 7, le moyen 450 est constitué de deux compositions de caoutchouc translucide 453 et opaque 454 qui sont respectivement situées de part et d'autre d'une hauteur interfaciale 455 prédéterminée de la tige 452 qui est prévue pour correspondre à un seuil d'usure à détecter dans l'élément de sculpture 427 de l'enveloppe 420 (voir Fig. 9).

Dans l'exemple de la Fig. 7, la tête 451 et une partie 453 de la tige 452 s'étendant à partir de la tête 451 sont constituées de la même composition translucide, laquelle est obtenue par moulage ou injection, alors que l'autre partie 454 de la tige 452 contenant ladite extrémité libre 452a est constituée de la composition opaque, laquelle est choisie par exemple identique à la composition de caoutchouc utilisée pour la bande de roulement.

La composition translucide 453 comprend une matrice élastomère constituée par exemple d'un polyisoprène, d'un copolymère styrène/ butadiène, d'un copolymère isoprène/ styrène ou d'un polybutadiène, et elle comprend en outre :
- une huile paraffinique en lieu et place des huiles aromatiques ou naphténiques,
- des antioxydants phénoliques non tachants en lieu et place des antiozonants qui conduisent à un brunissement important de la composition,
- de la silice à titre de charge renforçante en lieu et place du noir de carbone.

On comprendra que l'interface 455 entre ces deux compositions 453 et 454 peut être prévue plus proche de la tête 451 ou de ladite extrémité libre 452a, selon la criticité dudit seuil d'usure.

On a utilisé séparément et également en combinaison deux méthodes d'introduction et de maintien du moyen de transmission 450 dans l'évidement 480 de l'enveloppe 420.

Une première méthode consiste en un serrage mécanique de la tige 452 par la paroi de caoutchouc de l'évidement 480, obtenu par le choix d'un diamètre de la tige 452 qui est supérieur à celui dudit évidement 480 et par le logement de cette tige 452 à l'intérieur d'un moyen d'introduction 490 constitué d'un étui métallique en forme d'aiguille (représenté en coupe axiale à la Fig. 8) destiné à permettre l'introduction de la tige 452 dans l'enveloppe 420, de sorte que la tête 451 et l'extrémité libre 452a soient disposées de la manière précitée.

Comme cela est visible à la Fig. 8, l'étui 490 comporte, à l'une de ses extrémités, une ouverture 491 pour permettre l'insertion axiale de la tige 452, à son autre extrémité, une pointe tronconique 492 destinée à faciliter l'introduction de l'étui 490 dans l'évidement 480 de diamètre inférieur, et il comporte entre l'ouverture 491 et la pointe 492 un tronçon 493 cylindrique et creux sur au moins une partie de sa longueur qui forme un logement tubulaire destiné à contenir au moins une partie de la tige s'étendant à partir de son extrémité libre 452a (la longueur du logement étant inférieure à celle de la tige 452).

A titre indicatif, on a utilisé des moyens de transmission 450 dans lesquels le diamètre de la tête 451 est de 20 mm, le diamètre de la tige 452 varie de 1 mm à 5 mm. On a utilisé un coefficient de serrage de la tige 452 par l'évidement 480 allant de 0 % à 30 % (ce coefficient de serrage étant défini comme étant le rapport de la différence des diamètres de l'évidement 480 et de la tige 452 sur le diamètre dudit évidement 480). Quant au diamètre de l'évidement 480, il varie de 1 mm à 4 mm.

On a par ailleurs utilisé des étuis 490 d'une longueur totale L allant de 40 à 60 mm et dont le tronçon cylindrique creux 493 est délimité par une paroi annulaire 494 d'épaisseur égale à 0,3 mm. Quant au diamètre intérieur de cette paroi 494, il est prévu légèrement supérieur au diamètre de la tige 452 qu'il est destiné à contenir.

La Fig. 9 illustre l'introduction de l'étui 490 dans cet évidement 480, par la face interne 420a de l'enveloppe 420 (pour des raisons de clarté, les diverses nappes de câbles ne sont pas représentées). On voit que la tête 451 du moyen 450 demeure axialement à l'extérieur de l'ouverture 491 de l'étui 490 lorsque la tige 452 est logée dans ce dernier.

Dans une première étape de cette introduction (voir flèche A), on enfonce l'étui 490 dans l'évidement 480 , ce qui a pour effet de dilater ce dernier en augmentant son diamètre, jusqu'à ce que la pointe 492 et une partie adjacente dudit tronçon cylindrique 493 fassent saillie radialement à l'extérieur de ladite face externe 427a.

Dans une seconde étape (illustrée par la flèche B), on exerce une traction par exemple via une pince (non représentée) sur ladite partie 493 de l'étui 490 faisant saillie à l'extérieur de l'enveloppe 420, ce qui permet le passage radial de la tige 452 dans l'évidement 480 du fait de l'élasticité des compositions de caoutchouc adjacentes et amène la tête 451 du moyen 450 précisément sous ladite face interne 420a.

Dans une troisième étape consistant en l'extraction complète de l'étui 490 radialement à l'extérieur de l'enveloppe 420 du fait de la traction précitée, l'évidement 480 retrouve son diamètre initial et sa paroi vient serrer radialement la tige 452, ce qui permet de maintenir durablement le moyen 450 dans cette position au cours du roulage ultérieur de l'enveloppe 420.

Une seconde méthode d'introduction et de maintien du moyen de transmission 450 de la Fig. 7 dans l'évidement 480 de l'enveloppe 420 représenté à la Fig. 9 consiste à solidariser ce moyen 450 avec la paroi de l'évidement 480 par l'intermédiaire d'une colle de type bi-composants, sans devoir forcément procéder à un serrage mécanique de la tige 452 par la paroi de l'évidement 480.

Un premier composant C de cette colle (représenté à la Fig. 7) comprenant des ultra-accélérateurs et des activateurs de vulcanisation est déposé sur le moyen 450 par trempage de ce dernier dans une dissolution à base de ce premier composant, ou bien par dépôt d'un film de ce premier composant sur la tige 452 et sur la tête 451 par un procédé de type co-extrusion. Ce premier composant C recouvre la surface cylindrique de la tige 452 et la surface adjacente en forme de couronne circulaire de la tête 451.

Un second composant de cette colle (non représenté) sous forme de dissolution comprenant du soufre est déposé au moment de l'introduction du moyen 490 en forme d'aiguille dans l'évidement 480, sur la paroi extérieure dudit moyen 490, sur la paroi dudit évidement 480 et sur la couche intérieure 420a de l'enveloppe 420 sur laquelle la tête 451 est destinée à être appliquée. La dissolution à base de ce second composant permet de faciliter le passage du moyen d'introduction 490 dans l'évidement 480, par lubrification.

Après que le moyen d'introduction 490 a été extrait de l'enveloppe 420, lesdits premier C et second composants de la colle entrent en contact l'un avec l'autre et interagissent. On notera que cette interaction est d'autant plus effective que le degré de serrage mécanique de la tige 452 par la paroi de l'évidement 480 est plus élevé.

On notera également que ce collage de la tête 451 sur la couche intérieure 420a de l'enveloppe 420 permet de maintenir le moyen 450 contre la paroi de l'évidement 480 sans utiliser le moindre serrage mécanique de la tige 452 par la paroi 480.

La colle utilisée pour solidariser la tige 452 avec la paroi de l'évidement 480 est commercialisée par la société Schräder sous la dénomination « Saphir », et elle est à base de caoutchouc naturel et de noir de carbone.

Selon une variante de réalisation (non représentée) du moyen de transmission 450 selon les Figs. 7 à 9, on a utilisé la seule composition de caoutchouc translucide précitée pour constituer le moyen de transmission, ce dernier pouvant être introduit et maintenu dans l'évidement 480 de l'enveloppe 420 selon les méthodes précitées.

On notera que ce moyen de transmission entièrement translucide permet d'améliorer la précision du positionnement du seuil de détection de l'usure dans l'enveloppe 420 par rapport à la couche intérieure 420a de celle-ci sous laquelle est appliquée la tête du moyen de transmission. En effet, on ajuste l'extrémité de la tige du moyen après introduction de ce dernier dans l'évidement 480 (la tête étant alors appliquée sous la couche intérieure 420a), de sorte à positionner exactement cette extrémité au seuil d'usure à détecter en utilisant le fond de sculpture comme surface de référence.

Le volume restant de l'évidement 480 est entièrement comblé avec une composition de caoutchouc opaque telle que celle de la bande de roulement, ou bien avec un cylindre de caoutchouc opaque qui est déposé à la surface de cette tige translucide.

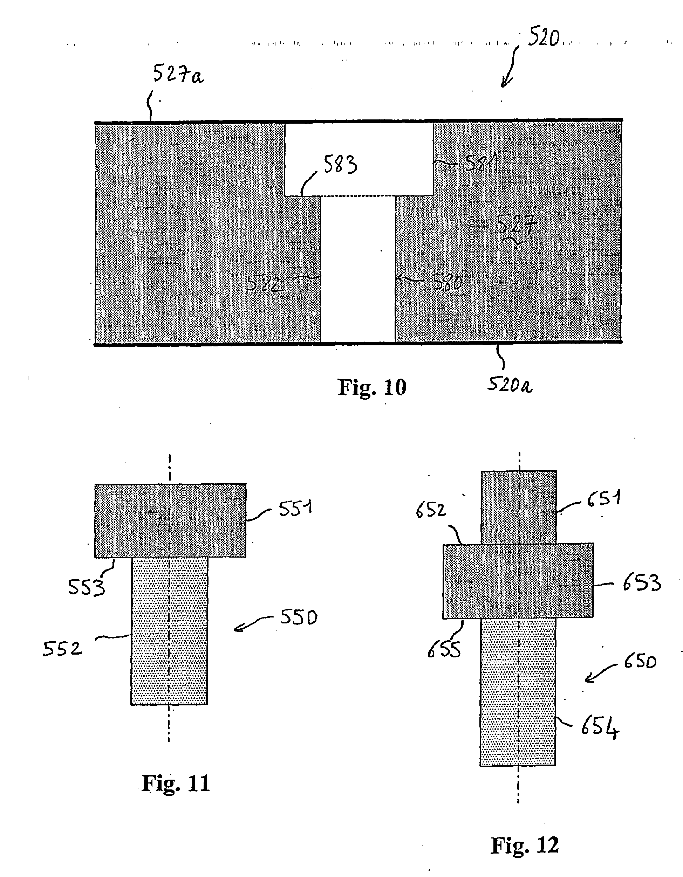

La Fig. 10 montre une enveloppe 520 dans laquelle a été pratiqué, par la face radialement externe 527a de celle-ci (formant le sommet de l'élément de sculpture 527 correspondant) et au cours de sa cuisson, un évidement 580 selon un autre mode de réalisation de l'invention qui est destiné à permettre l'introduction dans l'enveloppe 520 d'un autre moyen de transmission 550 selon l'invention (représenté à la Fig. 11).

Cet évidement 580 a été pratiqué à partir de ladite face externe 527a et il s'étend jusqu'à la face interne 520a de l'enveloppe 520. L'évidement 580 présente également une symétrie de révolution, mais il est constitué d'un premier tronçon cylindrique 581 de hauteur réduite débouchant sur ladite face externe 527a et d'un second tronçon cylindrique 582 concentrique de hauteur supérieure mais de diamètre inférieur, qui débouche sur ladite face interne 520a et qui est relié au premier par un épaulement 583 correspondant au seuil d'usure à détecter.

Le diamètre du premier tronçon 581 est par exemple égal à 5 mm, alors que le diamètre du second tronçon 582 est par exemple égal à 2,5 mm.

la Fig. 11 illustre la structure de cet autre moyen de transmission 550 selon l'invention qui est destiné à être introduit dans l'évidement 580 de la Fig. 10, ce moyen 550 comportant par conséquent de tels tronçons 551 et 552 et un tel épaulement 553.

Le second tronçon 552 du moyen 550 est constitué d'une composition de caoutchouc translucide telle que celle précitée en référence à la Fig. 7, et ledit premier tronçon 551 est constitué d'un cylindre de caoutchouc opaque (ce caoutchouc par exemple identique à celui constituant la bande de roulement) qui est introduit radialement à l'extérieur de l'enveloppe 520 dans cet évidement 580.

La Fig. 12 illustre la structure d'une variante de réalisation selon l'invention de ce moyen de transmission 650 (l'évidement destiné à le recevoir n'étant pas représenté).

Comme on peut le voir à la Fig. 12, ce moyen 650 comporte, de la face externe à la face interne de l'enveloppe destinée à le recevoir, un premier tronçon cylindrique 651 qui est constitué de ladite composition de caoutchouc opaque et qui est relié par un premier épaulement 652 à un second tronçon cylindrique 653 concentrique également constitué de ladite composition opaque mais de diamètre supérieur à celui dudit premier tronçon 651, et un troisième tronçon cylindrique 654 concentrique aux précédents qui est constitué de ladite composition de caoutchouc translucide et qui est relié au second tronçon 653 par un second épaulement 655.

On notera que le moyen de transmission 550, 650 des Figs. 11 ou 12 associé à l'évidement 580 de la Fig. 10 permet l'ajustement précis de l'interface 553 entre les compositions translucide et opaque au niveau de l'épaulement 583 (ou du second épaulement 655, dans l'exemple de la Fig. 12), lequel correspond au seuil d'usure à détecter et est lui-même exactement positionné par rapport au fond de sculpture, car étant directement issu du moulage.

Pour l'introduction et le maintien dans les évidements 580 correspondants des moyens de transmission 550, 650 selon les Figs. 11 ou 12, on peut également utiliser (séparément ou en combinaison) les deux méthodes susmentionnées de serrage mécanique du moyen par la paroi de l'évidement 580 ou bien de collage via ladite colle de type bi-composants.

D'une manière générale, les évidements 480, 580 précités en relation avec les Figs. 9 et 10 ont été réalisés selon deux méthodes distinctes et via des moyens de perçage distincts, comme indiqué ci-après.

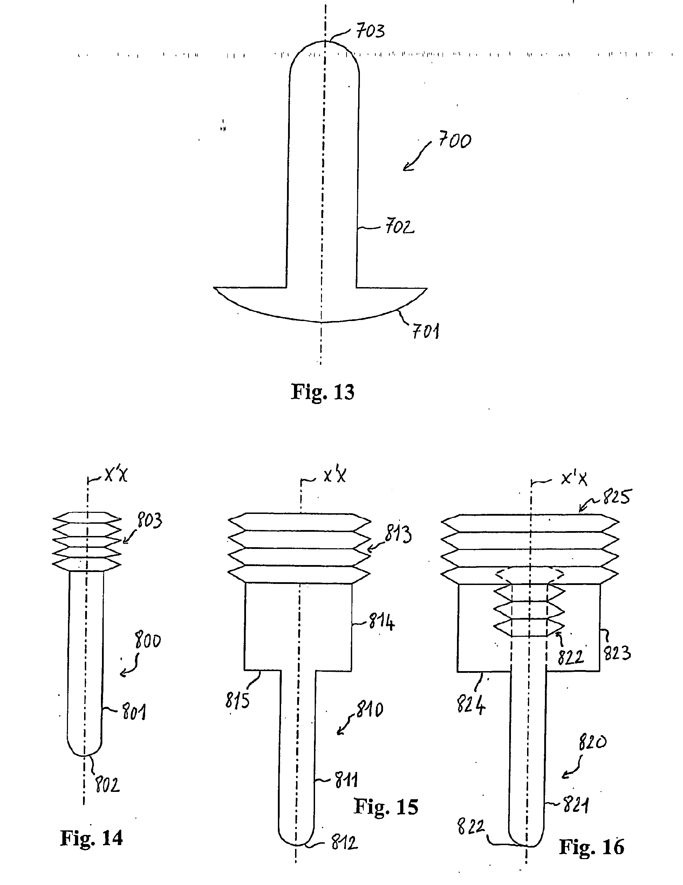

Selon une première méthode mise en oeuvre avant la cuisson du bandage, applicable aux évidements 480 de la Fig. 9, on utilise un ou des moyens de perçage métalliques 700 tels que celui représenté à la Fig. 13, qui présente dans cet exemple une symétrie de révolution, le plan de coupe considéré ici contenant l'axe de symétrie dudit moyen 700.

Ce moyen de perçage 700 présente sensiblement une forme de punaise, comportant une tête 701 pratiquement en forme de calotte circulaire d'épaisseur réduite qui est pourvue d'une tige cylindrique 702 en son centre qui est au diamètre de l'évidement 480 à réaliser et dont l'extrémité libre 703 est également en forme de calotte. Ce moyen 700 est destiné à être introduit dans le bandage 420 par la face radialement externe 427a de sa bande de roulement. La longueur de cette tige 702 est prévue supérieure à la distance séparant la couche intérieure 420a de l'enveloppe 420 de la surface radialement supérieure du dernier renfort de l'armature de sommet que comporte l'enveloppe 420.

Ce moyen de perçage 700 est avantageusement constitué d'un métal recouvert de Téflon® et il présente par exemple une hauteur totale variant de 6 à 10 mm, ladite tête 701 présentant un diamètre variant de 20 mm à 40 mm et ladite tige 702 présentant un diamètre variant de 1 mm à 5 mm.

On introduit donc le ou les moyens de perçage 700 dans le bandage 420 à l'emplacement ou aux emplacements désirés pour le ou les évidements 480. Le bandage est ensuite cuit et son positionnement dans la presse de cuisson (non représentée) est réalisé de façon à placer le ou les moyens de perçage 700 dans le ou les éléments de sculpture du moule qui correspondent à celui ou ceux 427 choisis pour être pourvu(s) du ou des moyens de transmission 450.

Après cuisson, on retire de l'enveloppe 420 ce ou ces moyens de perçage 700 et l'on forme ainsi un passage 480 à travers les nappes de câbles de l'enveloppe 420, telles que les nappes sommet de travail. On perfore ensuite le caoutchouc restant radialement à l'intérieur de ces nappes pour faire en sorte que l'évidement 480 débouche sur la couche intérieure 420a de l'enveloppe 420.

Selon une seconde méthode de réalisation des évidements 480, 580 mise en oeuvre au cours de la cuisson du bandage (cette méthode est applicable aux évidements 480 et 580 des Figs. 9 et 10), on met en place le bandage 420, 520 à cuire dans un moule de cuisson pourvu d'un ou de moyens de perçage 800, 810, 820 métalliques tels que ceux représentés aux Figs. 14, 15 ou 16, dont les diamètres sont ceux du ou des évidements 480, 580 à réaliser qui correspondent à ceux choisis pour être pourvus des moyens de transmission 450, 550. Puis on commande avant la cuisson le perçage du bandage 420, 520 par ce ou ces moyens 800, 810, 820, et l'on maintient ces derniers dans le bandage 420, 520 en cours de cuisson de sorte à maintenir en position écartée les câbles des diverses nappes traversées par ce ou ces moyens de perçage 800, 810, 820, sans que câbles ne soient coupés ou dégradés.

Le moyen de perçage 800 visible à la Fig. 14 comporte une tige cylindrique 801 dont l'extrémité libre 802 est par exemple en forme de calotte et qui est pourvue d'un moyen de commande 803 de sa position le long de son axe de symétrie X'X. Dans l'exemple de la Fig. 14, ce moyen de commande 803 est de type vis de commande (i.e. vis de translation).

Le moyen de perçage 810 visible à la Fig. 15 comporte une tige cylindrique 811 telle que celle de la Fig. 14 qui est reliée à un moyen de commande 813 de sa position le long de son axe de symétrie X'X, par l'intermédiaire d'une tronçon concentrique 814 formant un épaulement 815 destiné à constituer ledit seuil d'usure. Dans l'exemple de la Fig. 14, ce moyen de commande 813 est également de type vis de translation.

Le moyen de perçage 820 de la Fig. 16 comporte une tige cylindrique 821 telle que précitée qui est pourvue d'une vis de commande 822 de sa translation sur l'axe X'X, cette vis 822 étant montée à l'intérieur d'un tronçon concentrique 823 qui forme un épaulement 824 avec le tige 821 et qui est lui-même réglable en translation via une autre vis de commande 825.

On notera que cet épaulement 824 est prévu pour déterminer le seuil d'usure à détecter dans l'élément de sculpture 527 considéré.

En référence à ces Figs. 14 à 16, on notera également que la tige 801, 811, 821 de chaque moyen de perçage 800, 810, 820 présente un diamètre variant de 1 mm à 3 mm, pour une longueur variant de 10 à 20 mm.

De plus, il est à noter que la forme légèrement arrondie de l'extrémité libre 802, 812, 822 de chaque moyen de perçage est prévue pour autoriser la formation d'un évidement 480, 580 dans les nappes de câbles sans que ces câbles ne soient repoussés radialement, ni coupés.

On notera en outre que la longueur des moyens de perçage 800, 810, 820 selon cette seconde méthode est choisie de façon à obtenir un évidement 480, 580 débouchant dans la couche radialement intérieure 420a, 520a de l'enveloppe 420, 520, sans pour autant percer la membrane de cuisson.

On parvient ainsi à former dans l'enveloppe cuite 420, 520 un passage d'un diamètre prédéterminé à travers les nappes de câbles sans endommager ces derniers, notamment au niveau des nappes sommet. Cette méthode de réalisation des évidements 480, 580 au cours de la cuisson permet notamment d'introduire par la suite des moyens de transmission 450, 550 présentant un diamètre supérieur au pas des câbles dans les nappes sommet.

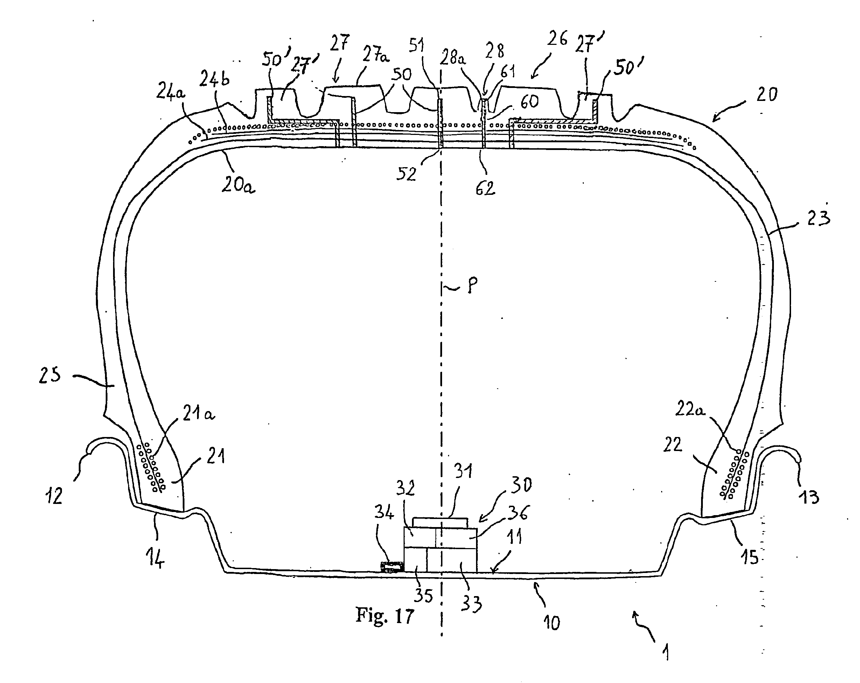

la Fig. 17 est une vue schématique en coupe méridienne d'un ensemble monté 1 selon l'invention conformément à une variante de réalisation de la Fig. 1, dans laquelle plusieurs moyens de transmission des rayonnements 50, 50', 60 comprennent chacun des assemblages de fibres optiques de diamètre compris entre 50 µm et 100 µm qui sont noyés dans une gaine de caoutchouc (non représentée pour des raisons de clarté) pour les découpler mécaniquement de la composition de bande de roulement adjacente.

Chaque assemblage illustré à la Fig. 17 est du même type que ceux utilisés pour réaliser les câbles métalliques ou textiles dans les pneumatiques (i.e. câbles à torons ou câbles à couches de pas d'enroulement fini ou infini), et il présente une résistance à la rupture accrue provoquée par les déformations en roulage du sommet de l'enveloppe 20. On peut par exemple utiliser des assemblages comportant chacun une dizaine à une centaine de fibres optiques.

On notera que chacun de ces assemblages peut être introduit dans l'enveloppe 20 après sa cuisson sans perçage préalable de ladite enveloppe 20, par piquage de la face radialement externe 20a de l'enveloppe 20 via une aiguille de type « aiguille médicale », du fait du diamètre réduit de chaque assemblage qui autorise son passage entre les câbles des nappes sommet sans imposer de déformation locale significative à ces câbles.

Ce type d'introduction par piquage permet l'utilisation de toute enveloppe, sans discrimination préalable entre les enveloppes 20 pourvues de moyens de transmission 50, 50', 60 selon l'invention et les enveloppes de marche courante.

Comme on peut le voir à la Fig. 17, un ou plusieurs de ces assemblages de fibres optiques dont les extrémités radialement supérieures respectives 51 sont logées dans des éléments de sculpture 27' excentrés par rapport au plan circonférentiel médian P de l'ensemble monté 1 sur lequel est centré le moyen de détection 30 des rayonnements, peuvent être globalement non rectilignes (i.e. constitués d'une succession de segments rectilignes reliés entre eux par des coudes), de sorte que l'extrémité radialement inférieure 52 de chaque assemblage qui est destinée à transmettre les rayonnements au moyen de détection 30 débouche sur la face radialement intérieure 20a de l'enveloppe 20 en étant pratiquement en regard dudit moyen de détection 30.

On notera que cette géométrie non rectiligne pour l'assemblage de fibres optiques permet de dissocier le positionnement de l'extrémité amont 51 (par exemple située dans la zone « épaule » de l'enveloppe 20) de chaque moyen de transmission 50', du positionnement de la partie restante dudit moyen 50' qui traverse à angle droit les nappes de câbles, sans risque de dégrader le fonctionnement de ces câbles, en positionnant le passage du moyen de transmission 50' au droit de ces câbles aux emplacements les moins pénalisants, par exemple au tiers de la largeur de la bande de roulement.

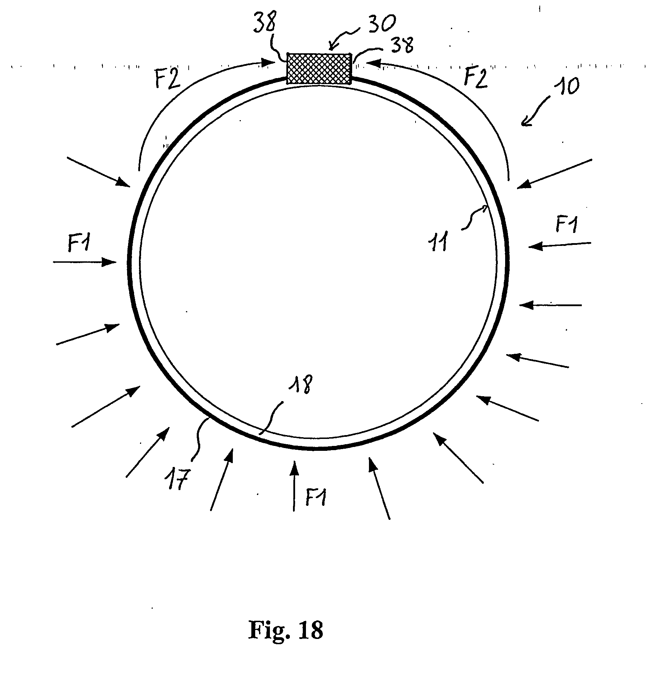

la Fig. 18 est une vue schématique en coupe partielle selon le plan circonférentiel médian P de la Fig. 1 d'une jante 11 de roue 10 selon une variante de réalisation de l'invention qui est pourvue d'un module de roue 30 selon l'invention comportant notamment un moyen de détection des rayonnements transmis par un moyen de transmission selon l'invention (le moyen de détection et le moyen de transmission ne sont pas représentés), et des moyens 17 pour capter et concentrer ces rayonnements vers ledit moyen de détection.

La jante 11 représentée à la Fig. 18 est pourvue en son fond d'un « collier » 18 de maintien du module de roue 30, lequel est par exemple tel que défini en relation avec la Fig. 1. Ce collier de maintien 18 épouse de manière connue la géométrie cylindrique de la jante 11 et, selon un exemple de réalisation de l'invention, ce collier 18 comporte sur sa face radialement supérieure le moyen 17 pour capter les rayonnements reçus sur à sa surface dans des directions radiales (voir flèches F1) par rapport à la surface cylindrique de la jante 11 et pour concentrer ces rayonnements captés en les dirigeant pratiquement le long de la surface cylindrique de la jante 11 (voir flèches F2) vers au moins une surface 38 du module de roue 30 contenant le détecteur de rayonnement.

On notera que ce moyen 17 pour capter et concentrer les rayonnements peut être à base du ou des matériaux constituant précisément le collier de maintien 18, et qu'il peut ainsi présenter avantageusement un coût réduit par unité de surface.

Cette dissociation du moyen 17 pour capter les rayonnements et du module de roue 30 permet de ne pas avoir à procéder à un « azimutage » précis du moyen de transmission par rapport au moyen de détection des rayonnements (i.e. faire en sorte que ce moyen de détection des rayonnements transmis soit situé précisément en regard du ou de chaque moyen de transmission ou au moins dans le « cône » des rayonnements transmis par ce dernier).

En référence à l'un quelconque des modes de réalisation des Figs. 1, 2, 5 ou 18, le procédé selon l'invention pour la mesure de l'usure d'une enveloppe de pneumatique 20, 120, 220 comprend les étapes suivantes. A titre non limitatif, on considèrera ci-après pour des raisons de clarté de l'exposé que les rayonnements incidents extérieurs à l'enveloppe 20, 120, 220 sont constitués de lumière visible.

Tant que l'usure de l'un des éléments de sculpture 27, 127, 227 de l'enveloppe 20, 120, 220 n'a pas atteint l'extrémité, périmètre ou surface amont radialement supérieure 51, 151, 251 du moyen de transmission de la lumière 50, 150, 250 qui est situé dans cet élément de sculpture, ce moyen de transmission ne débouche pas sur le sommet 27a, 127a, 227a dudit élément de sculpture. Il en résulte que le moyen de détection 31 ne détecte pas de lumière transmise dans l'espace intérieur à l'enveloppe 20, 120, 220, ce qui se traduit par le fait que le récepteur radio 41 monté sur le véhicule 40 ne reçoit aucun signal de lumière de l'émetteur 33. Par conséquent, l'afficheur 44 ne signale aucune information d'alerte au conducteur du véhicule 40 concernant l'usure de l'enveloppe 20, 120, 220.

Après que l'usure d'un élément de sculpture 27, 127, 227 a atteint l'extrémité, périmètre ou surface amont 51, 151, 251 du moyen de transmission de la lumière 50, 150, 250 correspondant, de sorte que ce moyen de transmission est découvert et affleure à la surface du sommet 27a, 127a, 227a, ledit moyen de transmission transmet à l'espace intérieur à l'enveloppe 20, 120, 220 la lumière provenant de l'extérieur de ladite enveloppe, et cette lumière transmise est détectée par le moyen de détection 31. L'émetteur 33 transmet alors un signal représentatif de la lumière détectée au récepteur 41 via l'antenne 34, et le conducteur est informé par l'afficheur 44 de l'atteinte d'un seuil d'usure pour l'élément de sculpture 27, 127, 227 (critique ou pas, selon la hauteur prédéterminée séparant initialement le moyen de transmission 50, 150, 250 du sommet 27a, 127a, 227a dudit élément de sculpture).

Dans l'exemple de la Fig. 2 où la partie amont 153 présente une section croissante dans la direction radialement opposée au sommet 127a de l'élément de sculpture 127, on notera que la accentuation de l'usure de ce dernier se traduit par un accroissement continu de la quantité de lumière transmise qui est détectée par les moyens de détection et de quantification 31, et donc du signal représentatif de cette quantité détectée qui est reçu par le récepteur 41 et, par conséquent, délivré en continu sous forme de messages d'alerte au conducteur du véhicule 40.

Dans le cas d'un moyen de transmission de la lumière 60 qui est situé dans un « témoin d'usure » 28, on notera que la distance initiale pratiquement nulle séparant l'extrémité amont 61 de ce moyen de transmission 60 du sommet 28a du « témoin d'usure » 28 se traduit par le fait que, lorsque l'usure de l'enveloppe 20 est telle que le « témoin d'usure » 28 évolue au contact du sol de roulage, il s'ensuit que le moyen de transmission 60 affleure peu de temps après à la surface dudit sommet 28a et transmet alors la lumière extérieure à l'espace intérieur de l'enveloppe 20. Il en résulte la détection de cette lumière et l'émission au récepteur 41 d'un signal représentatif, qui est délivré au conducteur du véhicule 40 sous forme d'un message d'alerte signifiant que le seuil critique d'usure a été dépassé.

On notera que le mode de réalisation de la Fig. 5 est particulièrement avantageux, dans la mesure où il tient compte d'une usure moyenne sur toute la circonférence de l'enveloppe 220, avec par conséquent une fiabilité accrue pour la détection de l'affleurement du moyen de transmission de la lumière 250 sur ladite circonférence.

En référence au mode de réalisation des Figs. 3 et 4, le procédé selon l'invention pour la mesure de l'usure d'une enveloppe de pneumatique 320 se différencie uniquement de ce qui vient d'être dit, en ce que le moyen de détection 331 peut détecter plusieurs paliers d'usure plus ou moins critiques via un seul moyen de transmission de la lumière 350, du fait que ce dernier contient une pluralité de fibres optiques de mesure 373 à 378 qui affleurent successivement à la surface du sommet 327a de l'élément de sculpture 327.

En conclusion, on notera que l'on pourrait également prévoir d'installer un récepteur radio sur une borne fixe au sol (en lieu et place du récepteur 41 monté sur le véhicule 40) placée dans une voie de passage du véhicule 40.

On notera également que l'afficheur 44 pourrait servir d'interface vis-à-vis d'autres utilisateurs que le seul conducteur du véhicule 40.

## Revendications

1. Procédé de mesure de l'usure d'au moins une enveloppe de pneumatique (20, 120, 220, 320, 420, 520) montée sur une roue (10) et comportant des éléments de sculpture (27, 27', 28, 127, 227, 327, 427, 527), **caractérisé en ce que**, l'enveloppe de pneumatique comportant des moyens de transmission de rayonnements électromagnétiques (50, 50', 60, 150, 250, 350, 450, 550, 650) et l'ensemble pneumatique et roue comportant des moyens de détection de rayonnements électromagnétiques (31, 331), ledit procédé comprend l'affectation, à une variable d'énergie représentative de l'énergie d'un rayonnement électromagnétique transmis de l'espace extérieur à l'espace intérieur de ladite ou de chaque enveloppe (20, 120, 220, 320, 420, 520) à travers l'un au moins desdits éléments (27, 27', 28, 127, 227, 327, 427, 527), d'une variable d'usure représentative de l'usure dudit ou desdits éléments (27, 27', 28, 127, 227, 327, 427, 527).

2. Procédé de mesure de l'usure d'au moins une enveloppe de pneumatique (20, 120, 220, 320, 420, 520) selon la revendication 1, lesdits éléments de sculpture (27, 27', 28, 127, 227, 327, 427, 527) étant destinés à être en contact avec un sol de roulage par l'intermédiaire de leurs sommets respectifs (27a, 28a, 127a, 227a, 327a, 427a, 527a) dès le début ou à un moment ultérieur du roulage, **caractérisé en ce que** ladite variable d'énergie est elle-même représentative de l'affleurement d'un moyen de transmission de rayonnements électromagnétiques (50, 50', 60, 150, 250, 350, 450, 550, 650) à la surface du sommet (27a, 28a, 127a, 227a, 327a, 427a, 527a) dudit élément (27, 27', 28, 127, 227, 327, 427, 527).

3. Procédé de mesure de l'usure d'au moins une enveloppe de pneumatique (20, 120, 220, 320, 420, 520) selon la revendication 1 ou 2, **caractérisé en ce qu'**il comprend l'affectation, à une valeur de ladite variable d'énergie inférieure à au moins un seuil d'énergie prédéterminé, d'une valeur de ladite variable d'usure correspondant à une usure dudit élément (27, 27', 28, 127, 227, 327, 427, 527) en deçà d'au moins un seuil d'usure prédéterminé.

4. Procédé de mesure de l'usure d'au moins une enveloppe de pneumatique (20, 120, 220, 320, 420, 520) selon la revendication 3, **caractérisé en ce qu'**il comprend l'affectation, à une valeur de ladite variable d'énergie égale ou supérieure audit seuil d'énergie prédéterminé, d'une valeur de ladite variable d'usure correspondant à une usure dudit élément (27, 27', 28, 127, 227, 327, 427, 527) ayant atteint ou dépassé ledit seuil d'usure prédéterminé.

5. Procédé de mesure de l'usure d'au moins une enveloppe de pneumatique (20, 120, 220, 320, 420, 520) selon la revendication 3, **caractérisé en ce qu'**il comprend l'affectation, à une pluralité de valeurs de ladite variable d'énergie atteignant ou dépassant ledit seuil d'énergie prédéterminé, d'autant de valeurs de ladite variable d'usure correspondant respectivement à des niveaux d'usure dudit élément (27, 27', 28, 127, 227, 327, 427, 527) atteignant ou dépassant ledit seuil d'usure prédéterminé, de sorte que l'accroissement de l'usure dudit élément (27, 27', 28, 127, 227, 327, 427, 527) soit mesuré d'une manière continue entre ledit seuil d'usure et un niveau d'usure maximal.

6. Procédé de mesure de l'usure d'au moins une enveloppe de pneumatique (20, 120, 220, 320, 420, 520) selon une des revendications précédentes, ladite ou lesdites enveloppes (20, 120, 220, 320, 420, 520) équipant un même véhicule automobile (40), **caractérisé en ce que** ledit rayonnement électromagnétique transmis dudit espace extérieur audit espace intérieur est constitué de lumière visible.

7. Enveloppe de pneumatique (20, 120, 220, 320, 420, 520) pour la mise en oeuvre du procédé de mesure de l'usure selon une des revendications précédentes, ladite enveloppe (20, 120, 220, 320, 420, 520) étant délimitée radialement par une face interne (20a, 120a, 220a, 320a, 420a, 520a) et par des éléments de sculpture (27, 27', 28, 127, 227, 327, 427, 527) destinés à être en contact avec un sol de roulage par l'intermédiaire de leurs sommets respectifs (27a, 28a, 127a, 227a, 327a, 427a, 527a) dès le début ou à un moment ultérieur du roulage, **caractérisée en ce que** ladite enveloppe (20, 120, 220, 320, 420, 520) comporte dans sa masse au moins un moyen de transmission de rayonnements électromagnétiques (50, 50', 60, 150, 250, 350, 450, 550, 650) qui est prévu pour pouvoir transmettre à travers l'un au moins desdits éléments (27, 27', 28, 127, 227, 327, 427, 527) un rayonnement incident issu de l'espace extérieur à ladite enveloppe (20, 120, 220, 320, 420, 520) à l'espace intérieur à celle-ci, à partir du moment où ledit moyen de transmission (50, 50', 60, 150, 250, 350, 450, 550, 650) affleure à la surface du sommet (27a, 28a, 127a, 227a, 327a, 427a, 527a) dudit élément (27, 27', 28, 127, 227, 327, 427, 527).

8. Enveloppe de pneumatique (20, 120, 220, 320, 420, 520) selon la revendication 7, **caractérisée en ce que** ledit ou chaque moyen de transmission (50, 50', 60, 150, 250, 350, 450, 550, 650) est perméable à la lumière visible.

9. Enveloppe de pneumatique (20, 120, 220, 420, 520) selon la revendication 8, **caractérisée en ce qu'**elle comporte plusieurs moyens de transmission des rayonnements (50, 60, 150, 250, 450, 550, 650) qui présentent respectivement différentes couleurs dans le spectre du domaine visible.

10. Enveloppe de pneumatique (120) selon une des revendications 7 à 9, **caractérisée en ce que** ledit ou chaque moyen de transmission (150) présente une section dans la direction axiale de ladite enveloppe (120) dont l'aire croît d'une manière continue sur une hauteur d'usure donnée radialement vers l'intérieur de ladite enveloppe (120), de telle sorte que la quantité d'énergie dudit rayonnement transmis dans ledit espace intérieur croisse d'une manière continue avec l'aire de ladite section affleurant à la surface du sommet (127a) dudit élément (127), lors de l'usure de ce dernier.

11. Enveloppe de pneumatique (220) selon une des revendications 7 à 10, **caractérisée en ce que** ledit ou chaque moyen de transmission (250) s'étend sur toute la circonférence de ladite enveloppe (220).

12. Enveloppe de pneumatique (20, 320) selon une des revendications 7 à 11, **caractérisée en ce qu'**elle comporte une pluralité de moyens de transmission (50, 350) dont les hauteurs respectives, dans la direction radiale de ladite enveloppe (20, 320), correspondent à différents seuils d'usure prédéterminés à détecter pour ledit élément (27, 28, 327).

13. Enveloppe de pneumatique (20, 220, 320) selon la revendication 8 ou 12, **caractérisée en ce que** ledit ou chaque moyen de transmission des rayonnements (50, 50', 60, 250, 350) est constitué d'une ou plusieurs fibres optiques débouchant dans ledit espace intérieur.

14. Enveloppe de pneumatique (20) selon la revendication 13, **caractérisée en ce que** ledit ou chaque moyen de transmission des rayonnements (50, 50', 60) est constitué d'un assemblage rectiligne ou non de fibres optiques de type câble à torons ou câble à couches qui est noyé dans une composition de caoutchouc destinée à découpler mécaniquement ledit assemblage des compositions de caoutchouc adjacentes dans ladite enveloppe (20).

15. Enveloppe de pneumatique (320) selon la revendication 13, **caractérisée en ce qu'**elle est pourvue d'au moins une unité de détection de l'usure (370) qui contient :
- dans une partie amont (371) radialement supérieure traversant ladite face interne (320a) et se terminant dans l'un desdits éléments de sculpture (327) en retrait de son sommet (327a), le(s)dit(s) moyen(s) de transmission (350), qui comportent une ou plusieurs fibres optiques (372 à 377) parallèles entre elles qui sont chacune prévues pour pouvoir transmettre un rayonnement incident issu de l'espace extérieur à ladite enveloppe (320) à l'espace intérieur à celle-ci et dont la ou les hauteurs radiales correspondent respectivement à un ou différents seuils d'usure prédéterminés à détecter pour ledit élément (327), et
- dans une partie aval (378) radialement inférieure montée dans ledit espace intérieur à l'enveloppe (320), un moyen de détection (331) connecté à ladite ou auxdites fibres optiques (372 à 377) qui est prévu pour détecter l'énergie du rayonnement qui lui est transmis par ladite ou chaque fibre (372 à 377), à partir du moment où l'une au moins desdites fibres (372 à 377) affleure à la surface du sommet (327a) dudit élément de sculpture (327).

16. Enveloppe de pneumatique (320) selon la revendication 15, **caractérisée en ce que** ladite unité de détection de l'usure (370) comporte, dans ladite partie aval (378), un émetteur couplé à une antenne pour émettre des signaux électriques représentatifs des mesures d'énergie rayonnée et un microprocesseur pour le traitement desdites mesures d'énergie rayonnée.

17. Enveloppe de pneumatique (20, 120, 220, 420, 520) selon une des revendications 7 à 12, **caractérisée en ce que** ledit ou chaque moyen de transmission (50, 60, 150, 250, 450, 550, 650) est constitué d'au moins une composition de caoutchouc qui est à base d'au moins un élastomère et qui présente un module d'allongement MA10 (à 10 % de déformation), mesuré selon la norme ASTM D 412 de 1998, qui est compris entre 1 MPa et 20 MPa.

18. Enveloppe de pneumatique (20, 120, 220, 420, 520) selon la revendication 17, **caractérisée en ce que** ledit élastomère appartient à la famille constituée par les élastomères réticulables au soufre ou avec des peroxydes, les élastomères thermoplastiques, les polyuréthannes vrais et les dérivés de polyuréthannes, tels que des polyuréthanne/ urée, des polyurées, des polyurée/ uréthanne, des polyuréthanne/ isocyanurate, des polyurée/ isocyanurate ou des polyuréthanne/ urée/ isocyanurate.

19. Enveloppe de pneumatique (20, 120, 220, 420, 520) selon la revendication 18, **caractérisée en ce que** ledit élastomère appartient à la famille constituée par les polyisoprènes, les copolymères styrène/ butadiène, les copolymères isoprène/ styrène et les polybutadiènes.

20. Enveloppe de pneumatique (20, 120, 220, 420, 520) selon une des revendications 17 à 19, **caractérisée en ce que** ledit ou chaque moyen de transmission (50, 60, 150, 250, 450, 550, 650) est constitué d'au moins une composition de caoutchouc translucide comprenant ledit élastomère, une huile paraffinique à titre d'huile plastifiante, au moins un antioxydant phénolique non tachant à titre d'antioxydant et une charge inorganique renforçante à titre de charge renforçante, ladite composition translucide étant dépourvue de noir de carbone.

21. Enveloppe de pneumatique (20, 120, 220, 320) selon une des revendications 7 à 16, **caractérisée en ce que** ledit ou chaque moyen de transmission (50, 50', 60, 150, 250, 350) est à base d'au moins un matériau présentant un module d'allongement MA10 (à 10 % de déformation), mesuré selon la norme ASTM D 412 de 1998, qui est compris entre 1 GPa et 10 GPa.

22. Enveloppe de pneumatique (20, 120, 220, 320) selon la revendication 21, **caractérisée en ce que** ledit matériau est à base de verre, d'un polymère thermoplastique tel qu'un polystyrène, un polyméthacrylate de méthyle, un polycarbonate, une polyamide, un polychlorure de vinyle ou un polyester, ou d'un polymère thermodurcissable.

23. Enveloppe de pneumatique (20, 320) selon la revendication 22, **caractérisée en ce que** ledit ou chaque moyen de transmission (50, 50', 60, 350) est constitué d'au moins une fibre optique (372 à 377) formée d'un coeur à base de verre, de silice ou de quartz et d'une gaine à base dudit polymère thermoplastique ou bien d'un verre, d'une silice ou d'un quartz d'indice de réfraction inférieur à celui dudit coeur.

24. Enveloppe de pneumatique (20, 320) selon la revendication 22, **caractérisée en ce que** ledit ou chaque moyen de transmission (50, 50', 60, 350) est constitué d'au moins une fibre optique (372 à 377) formée d'un coeur à base d'une matière plastique et d'une gaine à base d'une autre matière plastique d'indice de réfraction inférieur à celui dudit coeur.

25. Enveloppe de pneumatique (20, 120, 220, 320) selon la revendication 21 ou 22, **caractérisée en ce que** ledit ou chaque moyen de transmission (50, 60, 150, 250, 350) comporte un coeur qui est à base dudit ou desdits matériaux et qui est destiné à transmettre ledit rayonnement, et une gaine à base d'un caoutchouc cellulaire qui enveloppe ledit coeur et qui est prévue pour le découpler mécaniquement des compositions de caoutchouc adjacentes dans ladite enveloppe (20, 120, 220, 320).

26. Enveloppe de pneumatique (20, 120, 220, 320) selon la revendication 25, **caractérisée en ce que** ladite gaine est à base d'un caoutchouc cellulaire à cellules fermées et présente un module d'allongement MA10, mesuré selon la norme ASTM D 412 de 1998, compris entre 0,1 MPa et 1 MPa.

27. Enveloppe de pneumatique (20, 120, 220, 320, 420, 520) selon une des revendications 7 à 26, **caractérisée en ce que** ledit ou chaque moyen de transmission (50, 50', 60, 150, 250, 350, 450, 550, 650) est inséré dans ladite enveloppe (20, 120, 220, 320, 420, 520) suite à la cuisson du bandage correspondant.

28. Enveloppe de pneumatique (420) selon les revendications 20 et 27, **caractérisée en ce que** ledit ou chaque moyen de transmission (450) présente sensiblement une forme de punaise comportant une tête (451) pourvue d'une tige (452) en son centre, ladite tige (452) étant contenue dans un évidement radial (480) pratiqué de ladite face interne (420a) audit sommet (427a) de l'élément de sculpture correspondant (427), de sorte que ladite tête (451) soit en contact avec ladite face interne (420a) et que l'extrémité libre (452a) de ladite tige (452) affleure pratiquement à la surface dudit sommet (427a), ladite tête (451) et une partie (453) de la tige (452) s'étendant à partir de ladite tête (451) étant constituées de ladite composition de caoutchouc translucide alors que l'autre partie (454) de ladite tige (452) contenant ladite extrémité libre (452a) est constituée d'au moins une composition de caoutchouc opaque, la hauteur radiale interfaciale (455) entre ladite composition translucide et ladite composition opaque étant prévue pour correspondre à un seuil d'usure à détecter dans ledit élément de sculpture (427).

29. Ensemble monté (1, 101, 201, 301) pour la mise en oeuvre du procédé de mesure de l'usure selon une des revendications 1 à 6, **caractérisé en ce qu'**il comporte une enveloppe de pneumatique (20, 120, 220, 320, 420, 520) selon l'une des revendications 7 à 14 et une roue (10) pourvue d'un moyen de détection (31) de l'énergie du rayonnement transmis par ledit ou chaque moyen de transmission (50, 50', 60, 150, 250, 450, 550, 650) dans ledit espace intérieur à l'enveloppe (20, 120, 220, 320, 420, 520), à partir du moment où ledit ou lesdits moyens de transmission (50, 50', 60, 150, 250, 350, 450, 550, 650) affleurent à la surface du sommet (27a, 28a, 127a, 227a, 327a, 427a, 527a) dudit élément de sculpture (27, 27', 28, 127, 227, 327, 427, 527) du fait de l'usure de ce dernier.

30. Ensemble monté selon la revendication 29, caractérisée en ce ladite roue (10) est pourvue d'un moyen de quantification de l'énergie dudit rayonnement transmis dans ledit espace intérieur à ladite enveloppe (20, 120, 220, 320, 420, 520) et/ou de moyens de localisation dans ladite enveloppe (20, 120, 220, 320, 420, 520) de chaque moyen de transmission des rayonnements (50, 50', 60, 150, 250, 350, 450, 550, 650).

31. Ensemble monté selon la revendication 29 ou 30, **caractérisée en ce que** ladite roue (10) est pourvue d'un moyen de discrimination des couleurs des rayonnements visibles transmis.

32. Ensemble monté selon une des revendications 29 à 31, **caractérisée en ce que** ledit moyen de détection (31) est contenu dans un module de roue (30) qui est monté sur ladite jante (11) et qui est destiné à surveiller des paramètres de fonctionnement de l'ensemble monté (1, 101, 201), tels que sa pression et sa température internes, ledit module de roue (30) comportant en outre un émetteur (33) couplé à une antenne (34) pour émettre des signaux électriques représentatifs de mesures d'énergie rayonnée, de température et de pression, et un microprocesseur (36) destiné à traiter l'ensemble des mesures d'énergie rayonnée, de température et de pression.

33. Ensemble monté selon une des revendications 29 à 32, **caractérisée en ce que** ladite roue (10) est en outre pourvue de moyens (17) pour capter les rayonnements reçus à la surface de ladite jante (11) dans des directions radiales par rapport à ladite surface de jante (11), et pour concentrer ces rayonnements captés en les dirigeant pratiquement le long de ladite surface de jante (11) vers ledit détecteur de rayonnement (31).

34. Ensemble monté selon la revendication 33, **caractérisée en ce que** ladite jante (11) est pourvue en son fond d'un collier (18) de maintien dudit module de roue (30), la face radialement supérieure dudit collier (18) comportant lesdits moyens (17) pour capter et concentrer les rayonnements.

35. Véhicule automobile (40), **caractérisé en ce qu'**il comporte au moins un ensemble monté (1, 101, 201, 301) selon l'une des revendications 29 à 34, ledit véhicule (40) étant pourvu d'un récepteur (41) destiné à recevoir lesdits signaux dudit émetteur (33), d'un calculateur (43) connecté audit récepteur (41) qui est destiné à traiter lesdits signaux et d'un afficheur (44) installé dans l'habitacle dudit véhicule (40) qui est connecté audit calculateur (43) et qui est destiné à informer le conducteur dudit véhicule (40) de l'état d'usure desdits éléments de sculptures (27, 28, 127, 227, 327) de ladite ou chaque enveloppe (20, 120, 220, 320, 420, 520).

## Claims

1. Method of measuring the wear on at least one tyre (20, 120, 220, 320, 420, 520) mounted on a wheel (10) and comprising tread pattern elements (27, 27', 28, 127, 227, 327, 427, 527), **characterised in that**, the tyre comprising electromagnetic radiation transmission means (50, 50', 60, 150, 250, 350, 450, 550, 650) and the tyre wheel assembly comprising electromagnetic radiation detection means (31, 331), said method comprises the allocation, to an energy variable representing the energy of electromagnetic radiation transmitted from the external space to the internal space of the said or each tyre (20, 120, 220, 320, 420, 520) through at least one of the said elements (27, 27', 28, 127, 227, 327, 427, 527), of a wear variable representing the wear on the said element or elements (27, 27', 28, 127, 227, 327, 427, 527).

2. Method of measuring the wear on at least one tyre (20, 120, 220, 320, 420, 520) according to Claim 1, the said tread pattern elements (27, 27', 28, 127, 227, 327, 427, 527) being intended to be in contact with the ground by means of their respective tops (27a, 28a, 127a, 227a, 327a, 427a, 527a) right from the start or at a subsequent time during running, wherein the said energy variable itself represents the fact that an electromagnetic radiation transmission means (50, 50', 60, 150, 250, 350, 450, 550, 650) is flush with the surface of the top (27a, 28a, 127a, 227a, 327a, 427a, 527a) of the said element (27, 27', 28, 127, 227, 327, 427, 527).

3. Method of measuring the wear on at least one tyre (20, 120, 220, 320, 420, 520) according to Claim 1 or 2, wherein it comprises the allocation, to a value of the said energy variable less than at least one predetermined energy threshold, of a value of the said wear variable corresponding to wear on the said element (27, 27', 28, 127, 227, 327, 427, 527) which does not extend as far as at least one predetermined wear threshold.

4. Method of measuring the wear on at least one tyre (20, 120, 220, 320, 420, 520) according to Claim 3, wherein it comprises the allocation, to a value of the said energy variable equal to or greater than the said predetermined energy threshold, of a value of the said wear variable corresponding to a wear on the said element (27, 27', 28, 127, 227, 327, 427, 527) which has reached or exceeded the said predetermined wear threshold.

5. Method of measuring the wear on at least one tyre (20, 120, 220, 320, 420, 520) according to Claim 3, wherein it comprises the allocation, to a plurality of values of the said energy variable reaching or exceeding the said predetermined energy threshold, of the same number of values of the said wear variable corresponding respectively to levels of wear on the said element (27, 27', 28, 127, 227, 327, 427, 527) reaching or exceeding the said predetermined wear threshold, so that the increase in wear on the said element (27, 27', 28, 127, 227, 327, 427, 527) is measured continuously between the said wear threshold and a maximum wear level.

6. Method of measuring the wear on at least one tyre (20, 120, 220, 320, 420, 520) according to one of the preceding claims, the said tyre or tyres (20, 120, 220, 320, 420, 520) equipping the same motor vehicle (40), wherein the said electromagnetic radiation transmitted from the said external space to the said internal space consists of visible light.

7. Tyre (20, 120, 220, 320, 420, 520) for implementing the wear measurement method according to one of the preceding claims, the said tyre (20, 120, 220, 320, 420, 520) being delimited radially by an internal face (20a, 120a, 220a, 320a, 420a, 520a) and by tread pattern elements (27, 27', 28, 127, 227, 327, 427, 527) intended to be in contact with the ground by means of their respective tops (27a, 28a, 127a, 227a, 327a, 427a, 527a) from the very beginning or at a given moment in the said running, **characterised in that** the said tyre (20, 120, 220, 320, 420, 520) comprises in its mass at least one electromagnetic radiation transmission means (50, 50', 60, 150, 250, 350, 450, 550, 650) which is designed to be able to transmit, through at least one of the said elements (27, 27', 28, 127, 227, 327, 427, 527) incident radiation issuing from the space external to the said tyre (20, 120, 220, 320, 420, 520) to the space internal thereto, as from the time when the said transmission means (50, 50', 60, 150, 250, 350, 450, 550, 650) is flush with the surface of the top (27a, 28a, 127a, 227a, 327a, 427a, 527a) of the said element (27, 27', 28, 127, 227, 327, 427, 527).

8. Tyre (20, 120, 220, 320, 420, 520) according to Claim 7, wherein the transmission means (50, 50', 60, 150, 250, 350, 450, 550, 650) is or are permeable to visible light.

9. Tyre (20, 120, 220, 420, 520) according to Claim 8, wherein it comprises several radiation transmission means (50, 60, 150, 250, 450, 550, 650) which have respectively various colours in the spectrum of the visible range.

10. Tyre (120) according to one of Claims 7 to 9, wherein the transmission means (150) has or have a cross-section in the axial direction of the said tyre (120) whose area increases continuously over a given wear height radially towards the inside of said tyre (120), so that the quantity of energy of the said radiation transmitted in the said internal space increases continuously with the area of the said cross-section flush with the surface of the top (127a) of the said element (127) when the latter wears.

11. Tyre (220) according to one of Claims 7 to 10, wherein the transmission means (250) extends or extend over the entire circumference of the said tyre (220).

12. Tyre (20, 320) according to one of Claims 7 to 11, wherein it comprises a plurality of transmission means (50, 350) whose respective heights, in the radial direction of the said tyre (20, 320), correspond to various predetermined wear thresholds to be detected for the said element (27, 28, 327).

13. Tyre (20, 220, 320) according to Claim 8 or 12, wherein the said radiation transmission means (50, 50', 60, 250, 350) comprises or comprise one or more optical fibres opening out in the said internal space.

14. Tyre (20) according to Claim 13, wherein the radiation transmission means (50, 50', 60) comprises or comprise an assembly, rectilinear or not, of optical fibres of the twisted cable or layered cable type which is embedded in a rubber composition intended to mechanically decouple the said assembly from adjacent rubber compositions in the said tyre (20).

15. Tyre (320) according to Claim 13, wherein it is provided with at least one wear detection unit (370) which contains:
- in a radially uppermost upstream part (371) passing through the said internal face (320a) and terminating in one of the said tread pattern elements (327) recessed from its top (327a), the said transmission means (350), which comprises or comprise one or more optical fibres (372 to 377) parallel to each other which are each designed to be able to transmit incident radiation issuing from the space external to the said tyre (320) to the space internal thereto and whose radial height or heights correspond respectively to one or various predetermined wear thresholds to be detected for the said element (327), and
- in a radially lower downstream part (378) mounted in the said space internal to the tyre (320), a detection means (331) connected to the said optical fibre or fibres (372 to 377) which is provided for detecting the energy of the radiation which is transmitted to it by the said or each fibre (372 to 377), as from the time when at least one of the said fibres (372 to 377) is flush with the surface of the top (327a) of the said tread pattern element (327).

16. Tyre (320) according to Claim 15, wherein the said wear detection unit (370) comprises, in the said downstream part (378), a transmitter coupled to an antenna for transmitting electrical signals representing radiated energy measurements and a microprocessor for processing the said radiated energy measurements.

17. Tyre (20, 120, 220, 420, 520) according to one of Claims 7 to 12, wherein the said or each transmission means (50, 60, 150, 250, 450, 550, 650) comprise at least one rubber composition which is based on at least one elastomer and which has a modulus of elasticity MA10 (at 10% deformation), measured in accordance with ASTM D 412 of 1998, which is between 1 MPa and 20 MPa.

18. Tyre (20, 120, 220, 420, 520) according to Claim 17, wherein the said elastomer belongs to the family consisting of cross-linkable elastomers with sulphur or with peroxides, thermoplastic elastomers, true polyurethanes and derivatives of polyurethanes, such as polyurethane/urea, polyureas, polyurea/urethane, polyurethane/isocyanurate, polyurea/isocyanurate or polyurethane/urea/isocyanurate.

19. Tyre (20, 120, 220, 420, 520) according to Claim 18, wherein the said elastomer belongs to the family consisting of polyisoprenes, styrene/butadiene copolymers, isoprene/styrene copolymers and polybutadienes.

20. Tyre (20, 120, 220, 420, 520) according to one of Claims 17 to 19, wherein the said or each transmission means (50, 60, 150, 250, 450, 550, 650) consists of at least one translucent rubber composition comprising the said elastomer, a paraffin oil by way of plasticiser, at least one non-staining phenolic antioxidant as an antioxidant and a reinforcing inorganic filler as a reinforcing filler, said translucent composition containing no carbon black.

21. Tyre (20, 120, 220, 320) according to one of Claims 7 to 16, wherein the said or each transmission means (50, 50', 60, 150, 250, 350) is based on at least one material having a modulus of elasticity MA10 (at 10% deformation), measured in accordance with ASTM D 412 of 1998, which is between 1 GPa and 10 GPa.

22. Tyre (20, 120, 220, 320) according to Claim 21, wherein the said material is based on glass, a thermoplastic polymer such as a polystyrene, a methyl polymethacrylate, a polycarbonate, a polyamide, a polyvinyl chloride or a polyester, or a thermosetting polymer.

23. Tyre (20, 320) according to Claim 22, wherein the said or each transmission means (50, 50', 60, 350) consists of at least one optical fibre (372 to 377) formed from a core based on glass, silica or quartz and sheath based on the said thermoplastic polymer or a glass, a silica or a quartz with a refractive index less than that of the said core.

24. Tyre (20, 320) according to Claim 22, wherein the said or each transmission means (50, 50', 60, 350) consists of at least one optical fibre (372 to 377) formed from a core based on a plastics material and a sheath based on another plastics material with a refractive index less than that of the said core.

25. Tyre (20, 120, 220, 320) according to Claim 21 or 22, wherein the said or each transmission means (50, 60, 150, 250, 350) comprises a core which is based on the said material or materials and which is intended to transmit the said radiation, and a sheath based on a cellular rubber which encloses the said core and which is designed to decouple it mechanically from the adjacent rubber compositions in the said tyre (20, 120, 220, 320).

26. Tyre (20, 120, 220, 320) according to Claim 25, wherein the said sheath is based on cellular rubber with closed cells and has a modulus of elasticity MA10, measured in accordance with ASTM D 412 of 1998, of between 0.1 MPa and 1 MPa.

27. Tyre (20, 120, 220, 320, 420, 520) according to one of Claims 7 to 26, wherein the said or each transmission means (50, 50', 60, 150, 250, 350, 450, 550, 650) is inserted in the said tyre (20, 120, 220, 320, 420, 520) following the curing of the corresponding outer casing.

28. Tyre (420) according to Claims 20 and 27, wherein the said or each transmission means (450) has substantially the shape of a drawing pin comprising a head (451) provided with a stem (452) at its centre, the said stem (452) being contained in a radial recess (480) formed from the said internal face (420a) to the said top (427a) of the corresponding tread pattern element (427), so that the said head (451) is in contact with the said internal face (420a) and the free end (452a) of the said stem (452) is practically flush with the surface of the said top (427a), the said head (451) and a part (453) of the stem (452) extending from the said head (451) being formed from the said translucent rubber composition whilst the other part (454) of the said stem (452) containing the said free end (452a) is formed from at least one opaque rubber composition, the interface radial height (455) between the said translucent composition and the said opaque composition being designed to correspond to a wear threshold to be detected in the said tread pattern element (427).

29. Tyre wheel assembly (1, 101, 201, 301) for implementing the wear measurement method according to one of Claims 1 to 6, wherein it comprises a tyre (20, 120, 220, 320, 420, 520) according to one of Claims 7 to 14 an a wheel (10) provided with a means (31) of detecting the energy of the radiation transmitted by the said or each transmission means (50, 50', 60, 150, 250, 450, 550, 650) in the said space internal to the casing (20, 120, 220, 320, 420, 520), as from the time when the said transmission means (50, 50', 60, 150, 250, 350, 450, 550, 650) is or are flush with the surface of the top (27a, 28a, 127a, 227a, 327a, 427a, 527a) of the said tread pattern element (27, 27', 28, 127, 227, 327, 427, 527) because of the wear on the latter.

30. Tyre wheel assembly according to Claim 29, wherein said wheel (10) is provided with a means of quantifying the energy of the said radiation transmitted in the said space internal to the said tyre (20, 120, 220, 320, 420, 520) and/or means of locating each radiation transmission means (50, 50', 60, 150, 250, 350, 450, 550, 650) in the said tyre (20, 120, 220, 320, 420, 520).

31. Tyre wheel assembly according to Claim 29 or 30, wherein said wheel (10) provided with a means of discriminating the colours of the visible radiation transmitted.

32. Tyre wheel assembly according to one of Claims 29 to 31, wherein the said detection means (31) is contained in a wheel module (30) which is mounted on the said rim (11) and which is intended to monitor the operating parameters of the tyre / wheel assembly (1, 101, 201), such as its internal pressure and temperature, the said wheel module (30) also comprising a transmitter (33) coupled to an antenna (34) for transmitting electrical signals representing measurements of radiated energy, temperature and pressure, and a microprocessor (36) intended to process all the measurements of radiated energy, temperature and pressure.

33. Tyre wheel assembly according to one of Claims 29 to 32, wherein said wheel (10) is also provided with means (17) for picking up the radiation received at the surface of the said rim (11) in radial directions with respect to the said rim surface (11), and for concentrating this picked up radiation by directing it practically along the said rim surface (11) towards the said radiation detection (31).

34. Tyre wheel assembly according to Claim 33, wherein the said rim (11) is provided at its bottom with a collar (18) for holding the said wheel module (30), the radially uppermost face of the said collar (18) comprising the said means (17) for picking up and concentrating the radiation.

35. Motor vehicle (40), **characterised in that** it comprises at least one tyre / wheel assembly (1, 101, 201, 301) according to one of Claims 29 to 34, the said vehicle (40) being provided with a receiver (41) intended to receive the said signals from the said transmitter (33), a computer (43) connected to the said receiver (41) which is intended to process the said signals and a display (44) installed in the cabin of the said vehicle (40) which is connected to the said computer (43) and which is intended to inform the driver of the said vehicle (40) of the state of wear of the said tread pattern elements (27, 28, 127, 227, 327) of the said or each tyre (20, 120, 220, 320, 420, 520).

## Patentansprüche

1. Verfahren zur Messung der Abnutzung mindestens eines Luftreifenmantels (20, 120, 220, 320, 420, 520), der auf ein Rad (10) montiert ist und Profilelemente (27, 27', 28, 127, 227, 327, 427, 527) aufweist, **dadurch gekennzeichnet, dass**, da der Luftreifenmantel Einrichtungen zur Übertragung elektromagnetischer Strahlungen (50, 50', 60, 150, 250, 350, 450, 550, 650) aufweist, und die Einheit aus Luftreifen und Rad Einrichtungen zur Erfassung elektromagnetischer Strahlungen (31, 331) aufweist, das Verfahren die Zuweisung, zu einer für die Energie einer von der Außenumgebung zum Innenraum des oder jedes Mantels (20, 120, 220, 320, 420, 520) über mindestens eines der Elemente (27, 27', 28, 127, 227, 327, 427, 527) übertragenen elektromagnetischen Strahlung repräsentativen Energievariablen, einer Abnutzungsvariablen enthält, die für die Abnutzung des oder der Elemente (27, 27', 28, 127, 227, 327, 427, 527) repräsentativ ist.

2. Verfahren zur Messung der Abnutzung mindestens eines Luftreifenmantels (20, 120, 220, 320, 420, 520) nach Anspruch 1, wobei die Profilelemente (27, 27', 28, 127, 227, 327, 427, 527) dazu bestimmt sind, über ihre jeweiligen Scheitel (27a, 28a, 127a, 227a, 327a, 427a, 527a) von Anfang an oder zu einem späteren Fahrzeitpunkt mit einem Fahruntergrund in Kontakt zu sein, **dadurch gekennzeichnet, dass** die Energievariable selbst für das bündige Anliegen einer Übertragungseinrichtung elektromagnetischer Strahlungen (50, 50', 60, 150, 250, 350, 450, 550, 650) an der Scheitelfläche (27a, 28a, 127a, 227a, 327a, 427a, 527a) des Elements (27, 27', 28, 127, 227, 327, 427, 527) repräsentativ ist.

3. Verfahren zur Messung der Abnutzung mindestens eines Luftreifenmantels (20, 120, 220, 320, 420, 520) nach Anspruch 1 oder 2, **dadurch gekennzeichnet, dass** es die Zuweisung, zu einem Wert der Energievariablen geringer als mindestens eine vorbestimmte Energieschwelle, eines Werts der Abnutzungsvariablen entsprechend einer Abnutzung des Elements (27, 27', 28, 127, 227, 327, 427, 527) unter mindestens einer vorbestimmten Abnutzungsschwelle enthält.

4. Verfahren zur Messung der Abnutzung mindestens eines Luftreifenmantels (20, 120, 220, 320, 420, 520) nach Anspruch 3, **dadurch gekennzeichnet, dass** es die Zuweisung, zu einem Wert der Energievariablen gleich der oder höher als die vorbestimmte Energieschwelle, eines Werts der Abnutzungsvariablen entsprechend einer Abnutzung des Elements (27, 27', 28, 127, 227, 327, 427, 527) enthält, der die vorbestimmte Abnutzungsschwelle erreicht oder überschritten hat.

5. Verfahren zur Messung der Abnutzung mindestens eines Luftreifenmantels (20, 120, 220, 320, 420, 520) nach Anspruch 3, **dadurch gekennzeichnet, dass** es die Zuweisung, an eine Vielzahl von Werten der Energievariablen, die die vorbestimmte Energieschwelle erreichen oder überschreiten, von eben so vielen Werten der Abnutzungsvariablen entsprechend Abnutzungspegeln des Elements (27, 27', 28, 127, 227, 327, 427, 527) enthält, die die vorbestimmte Abnutzungsschwelle erreichen oder überschreiten, so dass die Zunahme der Abnutzung des Elements (27, 27', 28, 127, 227, 327, 427, 527) kontinuierlich zwischen der Abnutzungsschwelle und einem maximalen Abnutzungspegel gemessen wird.

6. Verfahren zur Messung der Abnutzung mindestens eines Luftreifenmantels (20, 120, 220, 320, 420, 520) nach einem der vorhergehenden Ansprüche, wobei der Mantel oder die Mäntel (20, 120, 220, 320, 420, 520) das gleiche Kraftfahrzeug (40) bestücken, **dadurch gekennzeichnet, dass** die von der Außenumgebung zum Innenraum übertragene elektromagnetische Strahlung aus sichtbarem Licht besteht.

7. Luftreifenmantel (20, 120, 220, 320, 420, 520) zur Durchführung des Verfahrens zur Messung der Abnutzung nach einem der vorhergehenden Ansprüche, wobei der Mantel (20, 120, 220, 320, 420, 520) radial von einer Innenseite (20a, 120a, 220a, 320a, 420a, 520a) und von Profilelementen (27, 27', 28, 127, 227, 327, 427, 527) begrenzt wird, die dazu bestimmt sind, über ihre jeweiligen Scheitel (27a, 28a, 127a, 227a, 327a, 427a, 527a) von Anfang an oder zu einem späteren Zeitpunkt des Fahrens mit einem Fahruntergrund in Kontakt zu sein, **dadurch gekennzeichnet, dass** der Mantel (20, 120, 220, 320, 420, 520) in seiner Masse mindestens eine Übertragungseinrichtung elektromagnetischer Strahlungen (50, 50', 60, 150, 250, 350, 450, 550, 650) aufweist, die vorgesehen ist, um durch mindestens eines der Elemente (27, 27', 28, 127, 227, 327, 427, 527) hindurch eine von der Außenumgebung des Mantels (20, 120, 220, 320, 420, 520) stammende einfallende Strahlung ab dem Moment in dessen Innenraum übertragen zu können übertragen zu können, in dem die Übertragungseinrichtung (50, 50', 60, 150, 250, 350, 450, 550, 650) bündig an der Fläche des Scheitels (27a, 28a, 127a, 227a, 327a, 427a, 527a) des Elements (27, 27', 28, 127, 227, 327, 427, 527) anliegt.

8. Luftreifenmantel (20, 120, 220, 320, 420, 520) nach Anspruch 7, **dadurch gekennzeichnet, dass** die oder jede Übertragungseinrichtung (50, 50', 60, 150, 250, 350, 450, 550, 650) für das sichtbare Licht durchlässig ist.

9. Luftreifenmantel (20, 120, 220, 420, 520) nach Anspruch 8, **dadurch gekennzeichnet, dass** sie mehrere Übertragungseinrichtungen der Strahlungen (50, 60, 150, 250, 450, 550, 650) aufweist, die je unterschiedliche Farben im Spektrum des sichtbaren Lichts aufweisen.

10. Luftreifenmantel (120) nach einem der Ansprüche 7 bis 9, **dadurch gekennzeichnet, dass** die oder jede Übertragungseinrichtung (150) einen Querschnitt in der axialen Richtung des Mantels (120) aufweist, dessen Fläche über eine gegebene Abnutzungshöhe radial zum Inneren des Mantels (120) kontinuierlich zunimmt, so dass die Energiemenge der in den Innenraum übertragenen Strahlung kontinuierlich mit der Fläche des Querschnitts zunimmt, die bündig an der Fläche des Scheitels (127a) des Elements (127) bei der Abnutzung dieses letzteren anliegt.

11. Luftreifenmantel (220) nach einem der Ansprüche 7 bis 10, **dadurch gekennzeichnet, dass** die oder jede Übertragungseinrichtung (250) sich über den ganzen Umfang des Mantels (220) erstreckt.

12. Luftreifenmantel (20, 320) nach einem der Ansprüche 7 bis 11, **dadurch gekennzeichnet, dass** er eine Vielzahl von Übertragungseinrichtungen (50, 350) aufweist, deren jeweilige Höhen in radialer Richtung des Mantels (20, 320) verschiedenen vorbestimmten Abnutzungsschwellen entsprechen, die für das Element (27, 28, 327) zu erfassen sind.

13. Luftreifenmantel (20, 220, 320) nach Anspruch 8 oder 12, **dadurch gekennzeichnet, dass** die oder jede Übertragungseinrichtung der Strahlungen (50, 50', 60, 250, 350) aus einer oder mehreren Lichtleitfasern besteht, die in dem Innenraum münden.

14. Luftreifenmantel (20) nach Anspruch 13, **dadurch gekennzeichnet, dass** die oder jede Übertragungseinrichtung der Strahlungen (50, 50', 60) aus einer geradlinigen oder nicht geradlinigen Zusammenfügung von Lichtleitfasern von der Art Litzenkabel oder Schichtkabel besteht, die in eine Kautschukzusammensetzung getaucht ist, welche dazu bestimmt ist, die Zusammenfügung mechanisch von den benachbarten Kautschukzusammensetzungen im Mantel (20) zu trennen.

15. Luftreifenmantel (320) nach Anspruch 13, **dadurch gekennzeichnet, dass** er mit mindestens einer Erfassungseinheit der Abnutzung (370) versehen ist, die enthält:
- in einem radial oberen vorderen Bereich (371), der die Innenseite (320a) durchquert und in einem der Profilelemente (327) zu seinem Scheitel (327a) zurückversetzt endet, die Übertragungseinrichtung(en) (350), die eine oder mehrere zueinander parallele Lichtleitfasern (372 bis 377) aufweisen, die je vorgesehen sind, um eine von der Außenumgebung des Mantels (320) stammende einfallende Strahlung in dessen Innenraum übertragen zu können, und deren radiale Höhe oder radialen Höhen je einer oder verschiedenen vorbestimmten Abnutzungsschwellen entsprechen, die für das Element (327) zu erfassen sind, und
- in einem radial unteren hinteren Bereich (378), der in den Innenraum des Mantels (320) montiert ist, eine mit der oder den Lichtleitfasern (372 bis 377) verbundene Erfassungseinrichtung (331), die vorgesehen ist, um die Energie der Strahlung zu erfassen, die an sie von der oder jeder Faser (372 bis 377) ab dem Moment übertragen wird, in dem mindestens eine der Fasern (372 bis 377) bündig an der Fläche des Scheitels (327a) des Profilelements (327) anliegt.

16. Luftreifenmantel (320) nach Anspruch 15, **dadurch gekennzeichnet, dass** die Erfassungseinheit der Abnutzung (370) im hinteren Bereich (378) einen mit einer Antenne gekoppelten Sender, um elektrische Signale zu senden, die für Messungen ausgestrahlter Energie repräsentativ sind, und einen Mikroprozessor für die Verarbeitung der Messungen ausgestrahlter Energie aufweist.

17. Luftreifenmantel (20, 120, 220, 420, 520) nach einem der Ansprüche 7 bis 12, **dadurch gekennzeichnet, dass** die oder jede Übertragungseinrichtung (50, 60, 150, 250, 450, 550, 650) aus mindestens einer Kautschukzusammensetzung besteht, die auf mindestens einem Elastomermaterial basiert und einen Dehnungsmodul MA10 (bei 10 % Verformung), gemessen gemäß der Norm ASTM D 412 von 1998, aufweist, der zwischen 1 MPa und 20 MPa liegt.

18. Luftreifenmantel (20, 120, 220, 420, 520) nach Anspruch 17, **dadurch gekennzeichnet, dass** das Elastomermaterial zu der Familie gehört, die aus den mit Schwefel oder Peroxiden vernetzbaren Elastomeren, den thermoplastischen Elastomeren, den echten Polyurethanen und den Polyurethan-Derivaten wie Polyurethan/Harnstoff, Polyharnstoffe, Polyharnstoff/Urethan, Polyurethan/Isocyanurat, Polyharnstoff/Isocyanurat oder Polyurethan/Harnstoff/Isocyanurat besteht.

19. Luftreifenmantel (20, 120, 220, 420, 520) nach Anspruch 18, **dadurch gekennzeichnet, dass** das Elastomermaterial zu der Familie gehört, die aus den Polyisoprenen, den Stryrol/Butadien-Copolymeren, den Isopren/Styrol-Copolymeren und den Polybutadienen besteht.

20. Luftreifenmantel (20, 120, 220, 420, 520) nach einem der Ansprüche 17 bis 19, **dadurch gekennzeichnet, dass** die oder jede Übertragungseinrichtung (50, 60, 150, 250, 450, 550, 650) aus mindestens einer durchscheinenden Kautschukzusammensetzung besteht, die das Elastomermaterial, ein Paraffinöl als Weichmacheröl, mindestens einen nicht fleckenden phenolischen Oxydationsinhibitor als Oxydationsinhibitor und einen verstärkenden anorganischen Füllstoff als verstärkenden Füllstoff enthält, wobei die durchscheinende Zusammensetzung keinen Ruß enthält.

21. Luftreifenmantel (20, 120, 220, 320) nach einem der Ansprüche 7 bis 16, **dadurch gekennzeichnet, dass** die oder jede Übertragungseinrichtung (50, 50', 60, 150, 250, 350) auf mindestens einem Material basiert, das einen Dehnungsmodul MA10 (bei 10 % Verformung), gemessen gemäß der Norm ASTM D 412 von 1998, aufweist, der zwischen 1 GPa und 10 GPa liegt.

22. Luftreifenmantel (20, 120, 220, 320) nach Anspruch 21, **dadurch gekennzeichnet, dass** das Material auf Glas, einem thermoplastischen Polymer wie einem Polystyrol, einem Polymethylmethacrylat, einem Polycarbonat, einem Polyamid, einem Polyvinylchlorid, oder einem Polyester, oder einem wärmehärtbaren Polymer basiert.

23. Luftreifenmantel (20, 320) nach Anspruch 22, **dadurch gekennzeichnet, dass** die oder jede Übertragungseinrichtung (50, 50', 60, 350) aus mindestens einer Lichtleitfaser (372 bis 377), die aus einem Kern auf der Basis von Glas, Siliciumdioxid oder Quarz geformt ist, und einer Hülle auf der Basis des thermoplastischen Polymers oder auch eines Glases, eines Siliciumdioxids oder eines Quarzes mit einem geringeren Brechungsindex als derjenige des Kerns besteht.

24. Luftreifenmantel (20, 320) nach Anspruch 22, **dadurch gekennzeichnet, dass** die oder jede Übertragungseinrichtung (50, 50', 60, 350) aus mindestens einer Lichtleitfaser (372 bis 377), geformt von einem Kern auf der Basis eines Kunststoffs, und aus einer Hülle auf der Basis eines anderen Kunststoffs mit einem geringeren Brechungsindex als derjenige des Kerns besteht.

25. Luftreifenmantel (20, 120, 220, 320) nach Anspruch 21 oder 22, **dadurch gekennzeichnet, dass** die oder jede Übertragungseinrichtung (50, 60, 150, 250, 350) einen Kern, der auf dem oder den Materialien basiert und dazu bestimmt ist, die Strahlung zu übertragen, und eine Hülle auf der Basis eines zellularen Kautschuks aufweist, die den Kern umhüllt und vorgesehen ist, um ihn mechanisch von den im Mantel (20, 120, 220, 320) benachbarten Kautschukzusammensetzungen abzukoppeln.

26. Luftreifenmantel (20, 120, 220, 320) nach Anspruch 25, **dadurch gekennzeichnet, dass** die Hülle auf einem zellularen Kautschuk mit geschlossenen Zellen basiert und einen Dehnungsmodul MA10, gemessen gemäß der Norm ASTM D 412 von 1998, aufweist, der zwischen 0,1 MPa und 1 MPa liegt.

27. Luftreifenmantel (20, 120, 220, 320, 420, 520) nach einem der Ansprüche 7 bis 26, **dadurch gekennzeichnet, dass** die oder jede Übertragungseinrichtung (50, 50', 60, 150, 250, 350, 450, 550, 650) nach dem Brennen des entsprechenden Reifens in den Mantel (20, 120, 220, 320, 420, 520) eingefügt wird.

28. Luftreifenmantel (420) nach den Ansprüchen 20 und 27, **dadurch gekennzeichnet, dass** die oder jede Übertragungseinrichtung (450) im Wesentlichen die Form einer Reißzwecke hat, die einen Kopf (451) mit einer Stange (452) in seiner Mitte aufweist, wobei die Stange (452) in einer radialen Aussparung (480) enthalten ist, die in der Innenseite (420a) am Scheitel (427a) des entsprechenden Profilelements (427) ausgearbeitet ist, so dass der Kopf (451) mit der Innenseite (420a) in Kontakt ist und das freie Ende (452a) der Stange (452) praktisch bündig an der Fläche des Scheitels (427a) anliegt, wobei der Kopf (451) und ein Teil (453) der Stange (452), der sich ausgehend von dem Kopf (451) erstreckt, aus der durchscheinenden Kautschukzusammensetzung bestehen, während der andere Teil (454) der Stange (452), der das freie Ende (452a) enthält, aus mindestens einer undurchsichtigen Kautschukzusammensetzung besteht, wobei die radiale Grenzflächenhöhe (455) zwischen der durchscheinenden Zusammensetzung und der undurchsichtigen Zusammensetzung vorgesehen ist, um einer im Profilelement (427) zu erfassenden Abnutzungsschwelle zu entsprechen.

29. Montierte Einheit (1, 101, 201, 301) zur Durchführung des Messverfahrens der Abnutzung nach einem der Ansprüche 1 bis 6, **dadurch gekennzeichnet, dass** sie einen Luftreifenmantel (20, 120, 220, 320, 420, 520) nach einem der Ansprüche 7 bis 14 und ein Rad (10) aufweist, das mit einer Erfassungseinrichtung (31) der Energie der von der oder jeder Übertragungseinrichtung (50, 50', 60, 150, 250, 450, 550, 650) in den Innenraum des Mantels (20, 120, 220, 320, 420, 520) übertragenen Strahlung ab dem Moment versehen ist, in dem die Übertragungseinrichtung oder die Übertragungseinrichtungen (50, 50', 60, 150, 250, 350, 450, 550, 650) an der Fläche des Scheitels (27a, 28a, 127a, 227a, 327a, 427a, 527a) des Profilelements (27, 27', 28, 127, 227, 327, 427, 527) aufgrund von dessen Abnutzung bündig anliegen.

30. Montierte Einheit nach Anspruch 29, **dadurch gekennzeichnet, dass** das Rad (10) mit einer Einrichtung zur Quantisierung der Energie der in den Innenraum des Mantels (20, 120, 220, 320, 420, 520) übertragenen Strahlung und/oder mit Einrichtungen zur Lokalisierung jeder Übertragungseinrichtung der Strahlungen (50, 50', 60, 150, 250, 350, 450, 550, 650) in dem Mantel (20, 120, 220, 320, 420, 520) versehen ist.

31. Montierte Einheit nach Anspruch 29 oder 30, **dadurch gekennzeichnet, dass** das Rad (10) mit einer Einrichtung zur Unterscheidung der Farben der übertragenen sichtbaren Strahlungen versehen ist.

32. Montierte Einheit nach einem der Ansprüche 29 bis 31, **dadurch gekennzeichnet, dass** die Erfassungseinrichtung (31) in einem Radmodul (30) enthalten ist, das auf die Felge (11) montiert und dazu bestimmt ist, Betriebsparameter der montierten Einheit (1, 101, 201), wie ihren Druck und ihre Innentemperatur, zu überwachen, wobei das Radmodul (30) außerdem einen mit einer Antenne (34) gekoppelten Sender (33), um für Messungen ausgestrahlter Energie, Temperatur und Druck repräsentative elektrische Signale zu senden, und einen Mikroprozessor (36) aufweist, der dazu bestimmt ist, die Gesamtheit der Messungen der ausgestrahlten Energie, der Temperatur und des Drucks zu verarbeiten.

33. Montierte Einheit nach einem der Ansprüche 29 bis 32, **dadurch gekennzeichnet, dass** das Rad (10) außerdem mit Einrichtungen (17) versehen ist, um die an der Fläche der Felge (11) empfangenen Strahlungen in radialen Richtungen bezüglich der Felgenfläche (11) aufzufangen, und um diese aufgefangenen Strahlungen zu konzentrieren, indem sie praktisch entlang der Felgenfläche (11) zum Strahlungsdetektor (31) gelenkt werden.

34. Montierte Einheit nach Anspruch 33, **dadurch gekennzeichnet, dass** die Felge (11) an ihrem Boden mit einer Halteschelle (18) des Radmoduls (30) versehen ist, wobei die radial obere Seite der Schelle (18) die Einrichtungen (17) aufweist, um die Strahlungen aufzufangen und zu konzentrieren.

35. Kraftfahrzeug (40), **dadurch gekennzeichnet, dass** es mindestens eine montierte Einheit (1, 101, 201, 301) nach einem der Ansprüche 29 bis 34 aufweist, wobei das Fahrzeug (40) mit einem Empfänger (41), der dazu bestimmt ist, die Signale von dem Sender (33) zu empfangen, mit einem mit dem Empfänger (41) verbundenen Rechner (43), der dazu bestimmt ist, die Signale zu verarbeiten, und mit einem Anzeiger (44) versehen ist, der im Innenraum des Fahrzeugs (40) eingebaut und mit dem Rechner (43) verbunden ist, und der dazu bestimmt ist, den Fahrer des Fahrzeugs (40) über den Abnutzungszustand der Profilelemente (27, 28, 127, 227, 327) des oder jedes Mantels (20, 120, 220, 320, 420, 520) zu informieren.
